# FASCICULE DE BREVET EUROPEEN

(11) **EP 4 016 937 B1**
(45) Date de publication et mention de la délivrance du brevet: **11.01.2023**
(21) Numéro de dépôt: 21216202.8
(22) Date de dépôt: 21.12.2021
(51) Int. Cl.: H04L 12/28, H04N 21/43, H04N 21/436, H04N 21/442, H04N 21/45

(54) **PROCEDE DE SYNCHRONISATION ET SYSTEME METTANT EN UVRE LEDIT PROCEDE**
SYNCHRONISIERUNGSVERFAHREN UND SYSTEM ZUR UMSETZUNG DIESES VERFAHRENS
METHOD FOR SYNCHRONISING AND SYSTEM IMPLEMENTING SAID METHOD

(30) Priorité: 21.12.2020 FR 2013830
(43) Date de publication de la demande: 22.06.2022
(73) Titulaire: SAGEMCOM BROADBAND SAS, 92500 Rueil-Malmaison (FR)
(72) Inventeur: BERGER, Jérôme, 92500 RUEIL MALMAISON (FR)
(74) Mandataire: Cabinet Le Guen Maillet

(56) Documents cités:
- US-A1- 2013 185 373

## Description

### DOMAINE TECHNIQUE

Au moins un mode de réalisation concerne un procédé de synchronisation d'un dispositif avec un groupe de dispositifs fonctionnant de manière synchronisée et contrôlé par au moins un contrôleur.

### ETAT DE LA TECHNIQUE ANTERIEURE

Des systèmes audios se développent dans lesquels une source audio, e.g. un décodeur de télévision ou une chaîne Hi-Fi numérique, distribue un flux audio à une pluralité de dispositifs de reproduction audio, e.g. une pluralité d'enceintes connectées (« smartspeaker » en anglais). Les dispositifs de reproduction audio peuvent être localisés dans une seule et même pièce d'une maison ou bien répartis dans différentes pièces de la maison. Par exemple, un premier dispositif de reproduction audio peut être localisé dans un salon et un second dispositif audio peut être localisé dans une cuisine.

Un tel système audio comprend généralement au moins un contrôleur, e.g. un téléphone portable ou une tablette, dont le rôle est de contrôler l'ensemble des dispositifs de reproduction audio du système. Un tel contrôleur sert d'intermédiaire entre un utilisateur et les dispositifs de reproduction audio. Notamment, il peut transmettre une commande d'un utilisateur, e.g. une commande d'augmentation de volume, à l'ensemble des dispositifs de reproduction audio ou bien informer l'utilisateur de l'état du système, e.g. en affichant des informations sur le flux audio en cours de lecture.

Un tel système audio n'est pas figé. Ainsi, l'utilisateur peut souhaiter ajouter un nouveau dispositif de reproduction audio au système audio afin par exemple d'étendre son écoute à d'autres pièces de la maison qui étaient dépourvues d'un tel dispositif de reproduction. Lorsqu'un nouveau dispositif de reproduction audio, e.g. une nouvelle enceinte connectée rejoint le système audio, il est important qu'il ait accès à l'état du système au moment où il le rejoint. L'état du système est défini par un ensemble de paramètres (e.g. un volume de lecture audio, un état de lecture, un identifiant du flux audio en cours de lecture, etc).

A cet effet, il est connu d'utiliser un dispositif dit maître qui contrôle le système et garantit à chaque instant qu'un dispositif rejoignant le système puisse prendre connaissance de l'état courant du système.

Dans la demande de brevet US 9 195 258 le dispositif maître est un des dispositifs du système. La solution décrite suppose de définir un mécanisme de sélection du dispositif maître parmi les dispositifs du système. En outre, le système ne fonctionnant que lorsque le dispositif maître est allumé, un utilisateur ne peut pas librement supprimer des dispositifs du système car il risque de supprimer le dispositif maître et donc de rendre le système inopérant.

US 2013/185373 concerne un système, un appareil et un procédé pour organiser des dispositifs dans un environnement de communication poste à poste. Un certain nombre d'appareils se synchronisent entre eux et sélectionnent des maîtres (ou des stations de synchronisation) pour organiser les appareils dans une hiérarchie. Les dispositifs maîtres ont des valeurs de préférence associées reflétant leur préférence ou leur aptitude à être un dispositif maître, et diffusent des trames de synchronisation pour maintenir les dispositifs synchronisés. Lorsque plusieurs appareils dans une ou plusieurs hiérarchies exécutent une application ou un service commun, ils forment un groupe privé pour échanger ou partager des données (par exemple, jouer à un jeu, transférer un fichier). Tous les dispositifs de la hiérarchie conservent et annoncent un identifiant public ou par défaut de la hiérarchie, et tous les dispositifs du groupe privé conservent et annoncent un identifiant privé spécifique au groupe. Les membres du groupe se synchronisent sous un maître de groupe supérieur (ou station de synchronisation racine), qui se synchronise avec un maître faisant partie de la hiérarchie.

Il est souhaitable de pallier ces différents inconvénients de l'état de la technique. Il est notamment souhaitable de proposer un procédé de synchronisation d'un nouveau dispositif rejoignant le système audio sans utiliser un tel équipement maître.

### EXPOSE DE L'INVENTION

Un procédé de synchronisation d'un dispositif avec un groupe de dispositifs fonctionnant de manière synchronisée est décrit. Chaque dispositif dudit groupe a en mémoire un état dudit groupe tel que connu dudit dispositif. Le groupe est contrôlé par au moins un contrôleur configuré pour envoyer des commandes auxdits dispositifs, lesdits dispositifs et ledit au moins un contrôleur étant interconnectés par un réseau local. Le procédé comprend :
- recevoir, par un dispositif dudit groupe, un message de requête d'un état courant dudit groupe envoyé en multicast par un dispositif dudit groupe à synchroniser ;
- tirer (aléatoirement une durée et attendre pendant ladite durée ;
- dans le cas d'une réception d'un message d'état de groupe émis par un autre dispositif dudit groupe, interrompre, son attente ;
- sinon, envoyer en multicast un message d'état de groupe comprenant un état dudit groupe connu dudit dispositif.

Le procédé de synchronisation décrit permet avantageusement de synchroniser les dispositifs d'un groupe sans avoir recours à un dispositif maître.

Selon un mode de réalisation particulier, le procédé de synchronisation comprend :
- à réception du message d'état de groupe, adopter, par ledit dispositif à synchroniser, l'état dudit groupe compris dans ledit message d'état de groupe ;
- envoyer en multicast, par ledit dispositif à synchroniser, un message de changement d'état pour informer lesdits autres dispositifs dudit groupe de son adoption de l'état dudit groupe compris dans ledit message d'état de groupe.

Selon un mode de réalisation particulier, le procédé de synchronisation comprend à réception du message de changement d'état ou du message d'état de groupe par un dispositif dudit groupe, ledit dispositif dudit groupe compare une somme de contrôle représentative de l'état de groupe qu'il connaît avec une somme de contrôle représentative de l'état de groupe compris dans ledit message reçu et déclenche une procédure de vote en cas de différence pour sélectionner un état de groupe commun, les dispositifs dudit groupe perdant la procédure de vote adoptant l'état de groupe commun.

Selon un mode de réalisation particulier, ledit message de changement d'état comprenant une somme de contrôle représentative de l'état de groupe adopté par ledit dispositif à synchroniser, chaque autre dispositif dudit groupe, à réception dudit message de changement d'état, compare une somme de contrôle représentative de l'état de groupe qu'il connaît avec ladite somme de contrôle comprise dans ledit message de changement d'état reçu et déclenche une procédure de vote en cas de différence pour sélectionner un état de groupe commun, les dispositifs dudit groupe perdant la procédure de vote adoptant l'état de groupe commun.

Selon un mode de réalisation particulier, le procédé comprend, préalablement à l'envoi en multicast, par ledit dispositif à synchroniser, dudit message de requête d'un état courant dudit groupe :
envoyer, par ledit contrôleur, un message de rattachement demandant audit dispositif à synchroniser de rejoindre ledit groupe, ledit message de rattachement comprenant un identifiant dudit dispositif à synchroniser ; et
par chaque dispositif dudit groupe recevant ledit message de rattachement, comparer ledit identifiant dudit dispositif à synchroniser compris dans ledit message de rattachement avec son propre identifiant et rejoindre ledit groupe en cas d'égalité.

Selon un mode de réalisation particulier, dans le cas où ledit identifiant dudit dispositif à synchroniser compris dans ledit message de rattachement est différent de son propre identifiant, le dispositif recevant ledit message de rattachement mémorise le fait que ledit dispositif identifié par ledit identifiant compris dans ledit message de rattachement rejoint le groupe.

Selon un mode de réalisation particulier, le procédé comprend :
- envoyer, par ledit contrôleur, un message de détachement demandant à un dispositif dudit groupe, dit dispositif sortant, de sortir dudit groupe, ledit message de détachement comprenant un identifiant dudit dispositif sortant ; et
- par chaque dispositif dudit groupe recevant ledit message de détachement, comparer ledit identifiant dudit dispositif à synchroniser compris dans ledit message de détachement avec son propre identifiant et sortir dudit groupe en cas d'égalité.

Selon un mode de réalisation particulier, dans le cas où ledit identifiant dudit dispositif compris dans ledit message de détachement est différent de son propre identifiant, le dispositif recevant ledit message de détachement mémorise le fait que ledit dispositif identifié par ledit identifiant compris dans ledit message de détachement sort du groupe.

Selon un mode de réalisation particulier, le procédé comprend les étapes suivantes pour éteindre un dispositif dudit groupe fonctionnant de manière synchronisée, ledit procédé étant exécuté par le dispositif à éteindre :
- Extinction des services et composants nécessaires à une activité opérationnelle du dispositif à éteindre à l'exception des services et composants nécessaires aux communications réseau ;
- Détection, par ledit dispositif à éteindre, de la présence sur le réseau local d'au moins un autre dispositif appartenant audit groupe ;
- Extinction des services et composants du dispositif à éteindre nécessaires aux communications réseau dans le cas où au moins un autre dispositif appartenant audit groupe est détecté par ledit dispositif à éteindre comme présent sur le réseau local ;
- dans le cas où aucun autre dispositif appartenant audit groupe n'est détecté par le dispositif à éteindre comme présent sur le réseau local alors le dispositif à éteindre exécute les étapes suivantes :
- Attente d'une réception d'un message en provenance d'un autre dispositif dudit groupe ;
   - si ledit message reçu est un message de requête d'un état dudit groupe, envoi, par ledit dispositif à éteindre, d'un message comprenant ledit état dudit groupe connu dudit dispositif à éteindre et extinction des services et composants du dispositif à éteindre nécessaires aux communications réseau ;
   - si ledit message reçu est un message indiquant que ledit autre dispositif dudit groupe connait ledit état du groupe, extinction des services et composants du dispositif à éteindre nécessaires aux communications réseau.

Selon un mode de réalisation particulier, ledit contrôleur est un dispositif dudit groupe.

Un dispositif d'un groupe de dispositifs fonctionnant de manière synchronisée est décrit. Chaque dispositif dudit groupe a en mémoire un état dudit groupe tel que connu dudit dispositif. Le groupe est contrôlé par au moins un contrôleur configuré pour envoyer des commandes auxdits dispositifs, lesdits dispositifs et ledit au moins un contrôleur étant interconnectés par un réseau local. Le dispositif comprend de la circuiterie électronique configurée pour :
- Recevoir un message de requête d'un état courant dudit groupe envoyé en multicast par ledit dispositif à synchroniser ;
- Tirer aléatoirement une durée et attendre pendant ladite durée ;
- Dans le cas d'une réception d'un message d'état de groupe émis par un autre dispositif dudit groupe, interrompre, son attente ;
- Sinon, envoyer en multicast un message d'état de groupe comprenant un état dudit groupe connu dudit dispositif.

Un système comprenant un groupe de dispositifs fonctionnant de manière synchronisée, chaque dispositif dudit groupe ayant en mémoire un état dudit groupe tel que connu dudit dispositif, ledit groupe étant contrôlé par au moins un contrôleur configuré pour envoyer des commandes auxdits dispositifs, lesdits dispositifs et ledit au moins un contrôleur étant interconnectés par un réseau local, ledit système étant configuré pour mettre en œuvre le procédé de synchronisation selon l'un des modes de réalisation précédents.

Un produit programme d'ordinateur est décrit qui comprend des instructions pour mettre en œuvre, par au moins un processeur, le procédé selon l'un des modes de réalisation précédents, lorsque ledit programme est exécuté par ledit au moins un processeur.

Un support de stockage caractérisé est décrit qui stocke un programme d'ordinateur comprenant des instructions pour mettre en œuvre par au moins un processeur, le procédé selon l'un des modes de réalisation précédents, lorsque ledit programme est exécuté par ledit au moins un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un appartement équipé d'un système audio connecté à un réseau local ;
[Fig. 2A] illustre un procédé de traitement d'une commande envoyée par un contrôleur et reçue par une enceinte selon un mode particulier de réalisation ;
[Fig. 2B] illustre un procédé de traitement d'un message indiquant un changement d'état envoyé par une première enceinte et reçu par une seconde enceinte selon un mode particulier de réalisation ;
[Fig. 2C] illustre un procédé de traitement d'un message indiquant un état de groupe reçu par une enceinte selon un mode particulier de réalisation ;
[Fig. 3A] illustre un procédé de synchronisation d'un dispositif avec un groupe de dispositifs auquel il appartenait préalablement selon un mode particulier de réalisation ;
[Fig. 3B] illustre un procédé de rattachement d'un dispositif à un groupe de dispositifs et de synchronisation dudit dispositif avec ledit groupe selon un mode particulier de réalisation ;
[Fig. 4] illustre un procédé de sortie d'un dispositif d'un groupe de dispositifs selon un mode particulier de réalisation ;
[Fig. 5] illustre, sous la forme d'une machine d'état, un procédé de mise en veille d'un dispositif d'un groupe donné selon un mode particulier de réalisation ;
[Fig. 6] illustre un procédé de démarrage d'une lecture synchronisée d'un flux audio tel que mis en œuvre côté contrôleur selon un mode particulier de réalisation ;
[Fig. 7] illustre un procédé de démarrage d'une lecture synchronisée d'un flux tel que mis en œuvre par une enceinte selon un mode particulier de réalisation ;
[Fig. 8A] illustre un procédé de mise en pause d'une lecture synchronisée d'un flux tel que mis en œuvre côté contrôleur selon un mode particulier de réalisation ;
[Fig. 8B] illustre un procédé de mise en pause ou de démarrage d'une lecture synchronisée d'un flux tel que mis en œuvre côté contrôleur selon un mode particulier de réalisation ;
[Fig. 9] illustre un procédé de mise en pause d'une lecture synchronisée d'un flux tel que mis en œuvre par une enceinte selon un mode particulier de réalisation ;
[Fig. 10] illustre une machine d'état mise en œuvre par un dispositif pour déclencher puis participer à un vote selon un mode particulier de réalisation ;
[Fig. 11] illustre des échanges de messages entre deux enceintes d'un même groupe lors d'une procédure de vote selon un mode particulier de réalisation ;
[Fig. 12A] illustre des échanges de messages entre deux enceintes d'un même groupe lors d'une procédure de vote dans le cas particulier où une des deux enceintes change d'état au cours du vote selon un mode particulier de réalisation ;
[Fig. 12B] illustre des échanges de messages entre deux enceintes d'un même groupe lors d'une procédure de vote dans le cas particulier où une des deux enceintes change d'état au cours du vote selon un mode particulier de réalisation ;
[Fig. 13] illustre des échanges de messages lors de l'envoi de commandes concurrentes par deux contrôleurs à deux enceintes d'un même groupe selon un mode particulier de réalisation ;
[Fig. 14] illustre des échanges de messages lors de l'envoi de commandes concurrentes concernant des fonctionnalités distinctes par deux contrôleurs à deux enceintes d'un même groupe selon un mode particulier de réalisation ;
[Fig. 15] illustre des échanges de messages entre deux enceintes d'un même groupe lors d'une procédure de vote dans le cas où l'état du groupe est subdivisé par fonctionnalité selon un mode particulier de réalisation ;
[Fig. 16] illustre schématiquement un exemple d'architecture matérielle d'un contrôleur selon un mode particulier de réalisation ; et
[Fig. 17] illustre schématiquement un exemple d'architecture matérielle d'un dispositif de reproduction selon un mode particulier de réalisation.

### EXPOSE DETAILLE DE MODES DE REALISATION

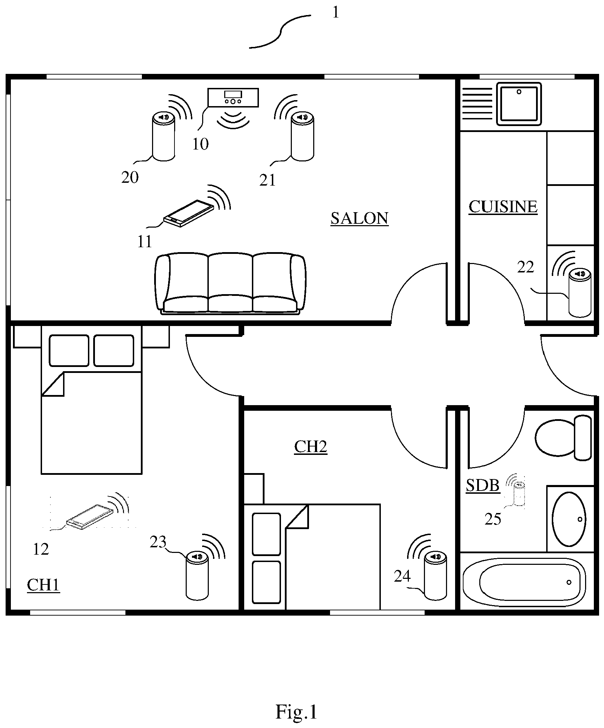

Les modes de réalisations décrits ci-dessous pour un système d'enceintes connectées s'appliquent à tout type de dispositif devant changer d'état de manière synchronisée sans avoir besoin d'un dispositif maître et ainsi maintenir un état cohérent dans le système. Ainsi, les dispositifs peuvent être des enceintes connectées comme décrit en référence à la Fig. 1 ou plus généralement des dispositifs de reproduction (« rendering device » en anglais) agencés pour reproduire un flux audio, des télévisions connectées ou plus généralement des dispositifs de reproduction agencés pour reproduire un flux vidéo ou un flux audio-vidéo. Par exemple, un système comprenant une pluralité de dispositifs de reproduction vidéo ou de dispositifs de reproduction audio/vidéo peut avantageusement être utilisé dans une application de type « showroom » dans laquelle des flux vidéo avec ou sans son doivent être diffusés de manière synchronisée.

Les modes de réalisations décrits ci-dessous peuvent également s'appliquer à un système domotique afin de permettre à un groupe d'interrupteurs et d'autres équipements connectés de changer d'état de manière synchronisée sans avoir besoin d'une centrale de commande, i.e. d'un dispositif maître. Les modes de réalisation décrits ci-dessous peuvent aussi se transposer sans effort dans d'autres contextes d'application de groupes de dispositifs synchronisés.

La Fig. 1 illustre schématiquement un appartement (ou une maison) comprenant une pluralité de pièces, notamment un salon, une cuisine, une salle de bain SDB, et deux chambres CH1 et CH2. L'appartement est équipé d'un système audio 1 connecté à un réseau local LAN (« acronyme anglais de « Local Area Network »). Le système audio 1 comprend une source 10, une pluralité d'enceintes connectées 20 à 25 qui communiquent via le réseau local LAN, et au moins un contrôleur qui communique aussi via le réseau local LAN. Sur la Fig.1, le système audio 1 comprend deux contrôleurs 11 et 12. La source 10 est par exemple un décodeur de télévision, une chaîne Hi-Fi numérique, un téléphone portable, une tablette, un serveur local, e.g. un serveur compatible DLNA (acronyme anglais de « Digital Living Network Alliance »), etc. Les contrôleurs 11, 12 sont par exemple des dispositifs tel un téléphone portable, un ordinateur, une tablette, une console de jeux, un décodeur TV, etc. Les contrôleurs 11, 12 peuvent également jouer le rôle de source 10 et envoyer des flux audio vers les enceintes connectées 20 à 25. Le ou les contrôleurs 11, 12 sont notamment configurés pour envoyer aux enceintes connectées des commandes, e.g. une commande d'augmentation de volume, de lecture d'un flux.

Les enceintes connectées 20 à 25 agissent de manière synchronisée en tant que groupe (ou groupes). Au sein d'un même groupe, les enceintes comprennent le même jeu de commandes et sont capables de déduire au fur et à mesure de l'application des commandes quel est l'évolution de l'état dans lequel se trouve le groupe en question.

Afin d'améliorer l'expérience d'un utilisateur qui se déplace dans l'appartement, il est souhaitable ainsi de grouper certaines enceintes entre elles afin qu'elles diffusent le même flux audio de manière synchronisée. Ainsi, un utilisateur peut passer d'une pièce à l'autre sans interruption de son écoute. Dans un mode particulier de réalisation, le système audio comprend un unique groupe de dispositifs GRPO auquel appartiennent toutes les enceintes connectées 20 à 25. Dans un autre mode de réalisation, plusieurs groupes sont définis. Par exemple, les enceintes connectées 20 et 21 qui forment une paire d'enceintes stéréo sont avantageusement intégrées à un même groupe de dispositifs GRPO afin qu'elles reproduisent de manière synchronisée le canal droit et le canal gauche d'un même flux audio stéréo. L'enceinte connectée 22 peut également appartenir au groupe GRPO et ainsi reproduire de manière synchroniser le même flux audio que les enceintes connectées 20 et 21. Les autres enceintées connectées 23 et 24 peuvent être intégrées à un second groupe de dispositifs GRP1 afin qu'elles reproduisent de manière synchronisée un autre flux audio. Dans d'autres modes de réalisation, plus de deux groupes de dispositifs sont formés.

La pluralité d'enceintes connectées 20 à 25 et les contrôleurs communiquent via le réseau local LAN en échangeant des messages généralement multicast et dans certains cas particuliers unicast. A cet effet, dans un mode particulier de réalisation, l'ensemble des dispositifs du système audio 1 sont abonnés à un même « groupe multicast » quel que soit le groupe de dispositifs (e.g. GRPO, GRP1) auquel ils appartiennent. Le terme « groupe de dispositifs » mentionné ci-dessus n'est pas à confondre avec le terme « groupe multicast » introduit ici. En particulier, comme indiqué précédemment, le système audio 1 peut comprendre plusieurs groupes de dispositifs, e.g. GRPO et GRP1. En revanche, l'ensemble des dispositifs du système audio 1 utilise la même adresse multicast pour communiquer sur le LAN. Dans une variante de réalisation, chaque groupe de dispositifs utilise sa propre adresse multicast qui est différente de celle des autres groupes de dispositifs. Dans la suite du document, le terme « groupe » est utilisé pour désigner un groupe de dispositifs, e.g. GRPO ou GRP1.

Dans un groupe de dispositifs donné, les enceintes connectées utilisent un protocole de synchronisation d'horloge afin de définir une base de temps commune. Par exemple, les enceintes utilisent le protocole de synchronisation d'horloge PTP (acronyme anglais de « Precision Time Protocol ») pour synchroniser leur horloge localement. Alternativement, les enceintes peuvent utiliser le protocole NTP (acronyme anglais de « Network Time Protocol ») pour synchroniser, via le LAN, leur horloge locale sur une référence d'heure.

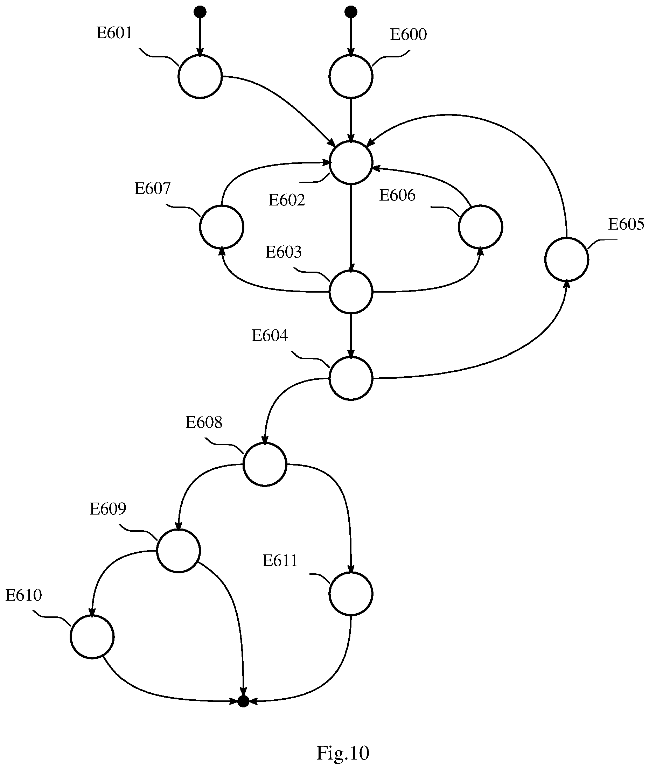

Chaque groupe de dispositifs est caractérisé par son état à un instant donné, l'état étant défini par un ensemble de paramètres qui dépendent de l'application. Chaque dispositif du groupe stocke en mémoire tous les paramètres relatifs à sa vision de l'état du groupe. Pour un groupe donné, l'état du groupe doit être cohérent, i.e. que tous les dispositifs dudit groupe doivent avoir le même état stocké en mémoire. Le fait que chaque dispositif du groupe stocke en mémoire sa vision de l'état du groupe permet donc de détecter des incohérences et de déclencher une procédure, e.g. une procédure de vote, afin de rétablir la cohérence de l'état au sein du groupe, i.e. de se mettre d'accord sur un état commun. Une telle procédure de vote est décrite en lien avec les Figs 10 à 13. Ainsi, il existe une incohérence au sein d'un groupe quand les différents dispositifs du groupe n'ont pas la même vision de l'état du groupe, i.e. pas le même état stocké en mémoire. Différents dispositifs d'un même groupe peuvent avoir une vision différente de l'état du groupe, en particulier dans les cas suivants :
- Si des contrôleurs envoient des commandes contradictoires, il est possible que des dispositifs d'un même groupe reçoivent ces commandes dans un ordre différent et se retrouvent donc dans des états différents ;
- Si des messages sont perdus par le réseau local LAN, il est possible qu'un ou plusieurs dispositifs perdent le contact avec les autres. Dans ce cas, leur vision de l'état du groupe peut diverger par rapport à celle des autres dispositifs. Lorsque le contact est rétabli, les dispositifs du groupe peuvent donc avoir des visions différentes de l'état du groupe.

La détection d'une incohérence au sein d'un groupe de dispositifs peut se faire en utilisant des sommes de contrôle représentative de l'état du groupe. A chaque état du groupe donné est associée une unique somme de contrôle. Ainsi, l'utilisation de sommes de contrôle notamment dans les messages échangés permet à deux dispositifs appartenant au même groupe de déterminer rapidement s'ils ont bien la même vision de l'état du groupe, sans qu'il soit nécessaire de comparer la totalité de l'état, i.e. l'ensemble des paramètres caractérisant cet état (e.g. volume de lecture audio, état de lecture, URI du flux audio en cours de lecture) vu par chaque dispositif sur le réseau local LAN. Ainsi, un premier dispositif recevant un message d'un second dispositif du même groupe peut comparer une somme de contrôle reçue représentative de l'état du groupe connu du second dispositif avec une somme de contrôle qui est stockée en mémoire du premier dispositif et qui est représentative de l'état du groupe connu du premier dispositif. En cas de valeurs différentes, le premier dispositif détecte une incohérence et peut déclencher une procédure de vote en vue de rétablir la cohérence de l'état au sein du groupe. Dans le cas d'une application audio avec enceintes connectées, les paramètres définissant l'état du groupe sont par exemple :
- un nom de groupe,
- un volume de lecture audio,
- un état de lecture (e.g., arrêté, en avance rapide ou en retour rapide, lecture en pause ou lecture en cours),
- un URI (acronyme anglais de « Uniform Resource Identifier ») du flux audio en cours de lecture,
- une liste d'URI de flux audio à lire une fois que le flux audio en cours de lecture est terminé,
- une identification de l'horloge actuellement utilisée pour la synchronisation sous la forme d'une URI ou d'un triplet protocole, adresse, port.

Dans le cas d'une application uniquement vidéo, ces paramètres sont par exemple :
- un nom de groupe,
- un état de lecture (e.g., arrêté, en avance rapide ou en retour rapide, lecture en pause ou lecture en cours),
- un URI du flux vidéo en cours de lecture,
- une liste d'URI de flux vidéo à lire une fois que le flux vidéo en cours de lecture est terminé,
- une identification de l'horloge actuellement utilisée pour la synchronisation sous la forme d'une URI ou d'un triplet protocole, adresse, port.

Outre les paramètres définis ci-dessus qui dépendent du domaine d'application, l'état du groupe est également défini par des paramètres liés au protocole de commande :
- un identifiant unique du groupe,
- et optionnellement un numéro d'époque.

Dans la suite du document les termes « numéro d'époque » et « époque » sont utilisés de manière interchangeable. L'identifiant unique du groupe est un nombre ou une chaîne de caractères qui permet aux différents dispositifs présents sur le réseau local LAN de reconnaître les dispositifs qui appartiennent au même groupe. L'identifiant est choisi au moment de la création du groupe de manière à limiter les risques de collision. Par exemple, l'identifiant est un UUID (acronyme anglais de « Universally Unique IDentifier ») ou une adresse MAC (acronyme anglais de « Medium Access Control ») du premier dispositif joignant le groupe.

Le numéro d'époque est un compteur qui est incrémenté à chaque changement d'état du groupe, que le changement survienne en réponse à la réception d'une commande ou pour toute autre raison (par exemple lorsque le flux en cours de lecture arrive à son terme et que le dispositif commence à lire le flux suivant dans une liste de lecture (« playlist » en anglais)).

Dans le cas où il y a un unique groupe de dispositifs, des paramètres de groupe, tels que le nom du groupe et l'identifiant du groupe, peuvent être omis pour définir l'état du groupe.

Dans un mode de réalisation particulier, le ou les contrôleurs d'un groupe appartiennent audit groupe, exception faite que dans le cadre de ses opérations de contrôleur, il n'applique pas les commandes. En appartenant audit groupe, le suivi de l'évolution de l'état du groupe grâce aux échanges de messages en multicast est facilité pour le contrôleur. Le contrôleur peut ainsi aisément afficher, sur un écran pour l'utilisateur, des paramètres de l'état du groupe ou des informations qui en sont dérivées. De plus, dans le cas où contrôleur est membre du groupe, il a les mêmes prérogatives que les autres membres du groupe. Ainsi, il peut déclencher une procédure de vote et participer au vote.

En outre, un contrôleur lorsqu'il est membre d'un groupe peut jouer un rôle de « mémoire » afin d'assurer la persistance de l'état du groupe. En effet, si le contrôleur est un téléphone mobile que l'utilisateur garde sur lui lorsqu'il se déplace d'une pièce à une autre, les dispositifs présents dans la première pièce peuvent être éteints dès que l'utilisateur part de cette première pièce. En effet, les dispositifs de la nouvelle pièce peuvent récupérer l'état du groupe auprès du contrôleur quand l'utilisateur arrive dans cette nouvelle pièce au lieu de le récupérer auprès des dispositifs présents dans la première pièce.

Un contrôleur qui est membre d'un groupe peut jouer le rôle de « relai » afin par exemple de jouer lui-même le son pendant que l'utilisateur passe d'une pièce à une autre.

Un contrôleur qui est membre d'un groupe peut également jouer le rôle de « relai » lorsque le LAN n'est plus accessible. C'est par exemple le cas si un téléphone mobile joue le rôle de contrôleur, et que l'utilisateur quitte son domicile avec ledit téléphone mobile. Dans ce cas, l'utilisateur peut continuer à profiter de la lecture d'un flux audio via son téléphone mobile, et peut à nouveau utiliser les enceintes connectées lors de son retour au domicile.

Ce mécanisme ne nécessite donc pas de synchronisation avec un serveur externe pour maintenir le transfert/la synchronisation de l'état. Il est avantageux, dans un tel cas, de prévoir un mécanisme optionnel de priorité de lecture. Par exemple, la lecture est prioritairement effectuée sur les enceintes connectées si elles sont disponibles. Le contrôleur téléphone mobile n'effectue la lecture du flux audio que lorsque le LAN n'est plus accessible depuis un certain délai, par exemple depuis 30 s. L'utilisation d'un tel délai permet d'éviter que la lecture bascule des enceintes vers le téléphone mobile lorsque ce dernier est en limite de portée radio du LAN.

### Envoi de commandes par le contrôleur

Dans le système audio 1, les contrôleurs 11 et 12 sont en charge d'envoyer (en multicast) des messages de commande pour donner des instructions aux enceintes, par exemple augmenter ou diminuer le volume audio. Outre des données spécifiques définissant la commande à exécuter, le message de commande comprend une valeur d'une somme de contrôle représentative de l'état du groupe calculée avant exécution de la commande et une valeur d'une somme de contrôle représentative de l'état du groupe calculée après exécution de la commande. Ces valeurs de somme de contrôle permettent en particulier de détecter et de traiter le cas où plusieurs contrôleurs envoient simultanément des commandes contradictoires. Ces sommes de contrôle sont par exemple calculées en utilisant une fonction de hachage, telle que CRC32 (acronyme anglais pour « 32bits Cyclic Redundancy Checksum »), MD5 (acronyme anglais pour « Message Digest 5 ») ou SHA (acronyme anglais pour « Secure Hash Algorithm »). La fonction de hachage est appliquée sur les paramètres définissant de l'état du groupe.

Un exemple de message de commande (appelé message « Command ») comprenant 5 champs est décrit dans le tableau ci-dessous :

| Nom | Description |
|---|---|
| type | Type de message |
| group_id | Identifiant de groupe |
| old_hash | Somme de contrôle représentative de l'état du groupe avant exécution de la commande |
| new_hash | Somme de contrôle représentative de l'état du groupe après exécution de la commande. |
| app_command | Données spécifiques de la commande |

Le champ « type » est un identifiant permettant d'identifier que le message en question est un message « Command ».

Le champ « group_id » est un identifiant permettant d'identifier le groupe dans lequel appliquer la commande.

Les champs « old_hash » et « new_hash » représentent les valeurs des sommes de contrôle représentatives de l'état du groupe respectivement avant et après exécution de la commande tel que connu du dispositif émetteur du message. Si le contrôleur qui envoie la commande n'est pas membre du groupe, il envoie un message, e.g. un message « RequestState » tel que décrit ci-après, avant de passer la commande afin d'obtenir les paramètres de l'état du groupe et notamment la somme de contrôle représentative de l'état du groupe avant exécution de la commande. Si le contrôleur qui envoie la commande est membre du groupe, il n'a pas besoin de demander cet état du groupe avant de passer une commande mais peut envoyer le message « Command » en calculant les valeurs des sommes de contrôle à partir de l'état qu'il a en mémoire.

Le champ « app_command » comprend les données spécifiques de la commande, e.g. une nouvelle valeur de volume audio.

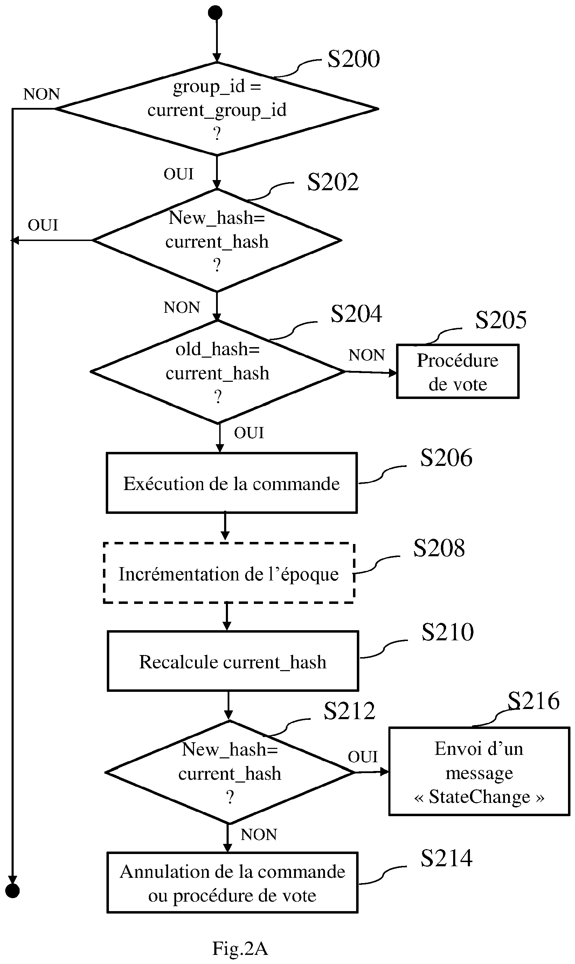

La Fig. 2A illustre un procédé de traitement d'une commande envoyée par le contrôleur 11 et reçue par l'enceinte 20 selon un mode particulier de réalisation.

Lors d'une étape S200, l'enceinte 20 compare l'identifiant « current_group_id » du groupe auquel elle appartient, lequel est stocké en mémoire, avec le champ « group_id » du message reçu. Si les valeurs sont différentes, alors le message est ignoré. Si le champ « group_id » est égal à « current_group_id », alors le procédé continue à une étape S202.

Lors de l'étape S202, l'enceinte 20 compare le champ « new_hash » du message reçu à la somme de contrôle « current_hash » représentative de l'état du groupe connu de l'enceinte 20. Si ces deux valeurs sont égales, alors la commande a déjà été exécutée et le message est ignoré.

Si ces deux valeurs sont différentes, alors le procédé continue à une étape S204.

Lors de l'étape S204, l'enceinte 20 compare le champ « old_hash » à la somme de contrôle « current_hash ». Si ces deux valeurs sont différentes, alors l'enceinte 20 déclenche une procédure de vote lors d'une étape S205. Une telle procédure de vote est décrite en lien avec les Figs 10 à 13. En variante, l'enceinte 20 attend un bref délai (par exemple 10 ms) lui permettant, le cas échéant, de recevoir une autre commande lui permettant de passer dans le bon état. Ainsi, le procédé est plus robuste au cas où les commandes arrivent dans le désordre. Dans une variante de l'étape S205, l'enceinte 20 conserve un historique des sommes de contrôle passées. Si la paire « old_hash, » « new_hash » représente une transition présente dans l'historique, alors la commande est obsolète et est ignorée.

Si ces deux valeurs sont égales, alors la commande est applicable. L'enceinte 20 exécute, lors d'une étape S206, la commande décrite dans le champ « app_command », optionnellement incrémente le numéro d'époque lors d'une étape S208 et recalcule, lors d'une étape S210, la somme de contrôle « current_hash » suite à l'application de la commande. La somme de contrôle « current_hash » est ainsi représentative du nouvel état du groupe connu de l'enceinte 20.

Lors d'une étape S212, l'enceinte 20 compare le champ « new_hash » à la nouvelle somme de contrôle « current_hash ». Si ces deux valeurs sont différentes, alors la commande est invalide. Dans ce cas, deux options sont possibles (étape S214). Soit l'enceinte 20 restaure l'état précédent du groupe, i.e. annule la commande, soit elle déclenche une procédure de vote.

Si ces deux valeurs sont identiques, alors l'enceinte 20 envoie en multicast, lors d'une étape S216, un message de notification de changement d'état (appelé message « StateChange »), qui permet de notifier, aux autres dispositifs du groupe, un changement d'état suite à la prise en compte de la commande, y compris donc au contrôleur qui a envoyé la commande.

Un exemple de message « StateChange » est décrit dans le tableau ci-dessous :

| Nom | Description |
|---|---|
| type | Type de message |
| has_old_hash | Le message contient-il un champ « old_hash » ? |
| has_command | Le message contient-il un champ « app_command » ? |
| group_id | Identifiant de groupe |
| old_hash | Somme de contrôle avant le changement d'état (champ présent/absent selon la valeur du champ « has_old_hash ») |
| new_hash | Somme de contrôle après le changement d'état |
| app_command | Données spécifiques de la commande (champ présent/absent selon la valeur du champ « has_command ») |

Le champ « type » est un identifiant permettant d'identifier que le message en question est un message « StateChange ».

Le champ « has_old_hash » indique (par exemple sur un bit) si le champ « old_hash » est présent dans le message. En effet, dans le cas où le dispositif qui envoie le message « StateChange » ne connait pas l'état précédent du groupe (par exemple parce qu'il vient de démarrer ou parce l'état qu'il voyait a été invalidé par un vote), le champ « old_hash » est omis et le champ « has_old_hash » est mis à une valeur prédéfinie, e.g. 0, et sinon, le champ « has_old_hash » est mis à une autre valeur prédéfinie, e.g. 1.

Le champ « has_command » indique (par exemple sur un bit) si le champ « app_command » est présent dans le message. Par exemple, si « has_command » est égal à 1 alors le champ « app_command » est présent et si « has_command » est égal à 0 alors le champ « app_command » est absent.

Le champ « group_id » est un identifiant permettant d'identifier le groupe auquel appartient le dispositif émetteur du message.

Les champs « old_hash » et « new_hash » contiennent les valeurs des sommes de contrôle représentatives de l'état du groupe, respectivement avant et après le changement d'état, tel que connu du dispositif émetteur du message.

Dans le cas où le message « StateChange » est envoyé en réponse à un message « Command » comme c'est le cas à l'étape S216 de la Fig. 2A (le message « StateChange » peut être envoyé dans d'autres circonstances), il est avantageux d'inclure une copie de ladite commande dans le message au moyen du champ « app_command ». Ainsi, si un autre dispositif du groupe n'a pas reçu le message « Command », alors il peut quand même appliquer la commande lorsqu'il reçoit le message « StateChange ».

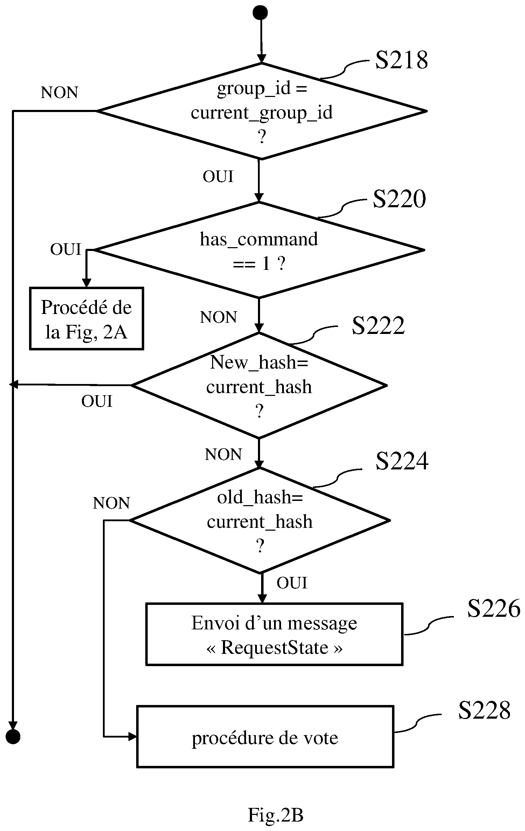

La Fig. 2B illustre un procédé de traitement d'un message de notification de changement d'état, i.e. message « StateChange », envoyé par l'enceinte 20 et reçu par l'enceinte 21 selon un mode particulier de réalisation.

Lors d'une étape S218, l'enceinte 21 compare l'identifiant « current_group_id » du groupe auquel elle appartient, lequel est stocké en mémoire, avec le champ « group_id » du message reçu. Si les valeurs sont différentes, alors le message est ignoré. Si le champ « group_id » est égal à « current_group_id », alors le procédé continue à une étape S220. Lors de l'étape S220, l'enceinte 21 vérifie si le message « StateChange » reçu comprend un champ « app_command ». Dans le cas où le message « StateChange » envoyé par l'enceinte 20 et reçu par l'enceinte 21 comprend un champ « app_command », alors le message « StateChange » est traité par l'enceinte 21 comme un message « Command », i.e. le procédé décrit en lien avec la Fig.2A est appliqué. Dans ce cas (voir Fig. 2A), si le champ « new_hash » du message reçu est égal à la somme de contrôle « current_hash » représentative de l'état du groupe connu de l'enceinte 21, alors la commande a déjà été exécutée par l'enceinte 21 et le message est ignoré ; sinon, l'enceinte 21 prend en compte la commande.

Si le message « StateChange » ne comprend pas de champ « app_command », alors l'enceinte 21 compare, lors d'une étape S222, le champ « new_hash » à la somme de contrôle « current_hash » représentative de l'état du groupe connu de l'enceinte 21. Si ces deux valeurs sont égales, alors le groupe est dans un état cohérent et le message est ignoré. Sinon, le procédé continue à une étape S224.

Lors de l'étape S224, l'enceinte 21 compare le champ « old_hash » à la somme de contrôle « current_hash ». Si le champ « old_hash » est égal à la somme de contrôle « current_hash », alors l'enceinte 21 envoie en multicast, lors d'une étape S226, un message « RequestState » afin d'obtenir les paramètres du nouvel état du groupe. Optionnellement, l'enceinte 21 attend un bref délai (par exemple 5 ms) avant d'émettre le message « RequestState » ou vérifie si elle est sur le point d'effectuer un changement d'état (par exemple parce que le flux audio en cours de lecture arrive à son terme) qui l'amènerait dans le bon état. Sinon, i.e. dans le cas où ni le champ « old_hash » ni le champ « new_hash » n'est égal à la somme de contrôle « current_hash », alors l'enceinte 21 déclenche, lors d'une étape S228, une procédure de vote.

Le message « RequestState » qui est envoyé par l'enceinte 21 afin d'obtenir les paramètres du nouvel état du groupe comprend l'identification du groupe. Un exemple de message « RequestState » comprenant 2 champs est décrit dans le tableau ci-dessous :

| Nom | Description |
|---|---|
| type | Type de message |
| group_id | Identifiant de groupe |

Le champ « type » est un identifiant permettant d'identifier que le message en question est un message « RequestState ».

Le champ « group_id » est un identifiant permettant d'identifier le groupe dont l'enceinte 21 veut connaitre l'état.

Lors de la réception du message « RequestState », les dispositifs du groupe (notamment les enceintes connectées et le cas échéant les contrôleurs) qui le reçoivent et qui appartiennent au groupe identifié par le champ « groupe_id » tirent de manière aléatoire une durée, et attendent pendant cette durée (également appelée temps d'attente) avant d'envoyer une réponse au message « RequestState » reçu. Par exemple, une première enceinte 20 attend pendant un temps d'attente D0 de 10 ms, et une autre enceinte 22 attend pendant un temps d'attente D1 de 20 ms. Avantageusement, les temps d'attente sont courts, e.g. inférieurs à 100 ms.

Le dispositif dont le temps d'attente a fini de s'écouler en premier envoie un message « GroupState » en multicast. Ce message est envoyé par un dispositif pour donner aux autres dispositifs d'un groupe le détail de sa vision de l'état dudit groupe. Le message « GroupState » comprend l'identification du groupe et la somme de contrôle représentative de l'état du groupe connu du dispositif émetteur dudit message. Un exemple de message « GroupState » comprenant 5 champs est décrit dans le tableau ci-dessous :

| Nom | Description |
|---|---|
| type | Type de message |
| group_id | Identifiant de groupe |
| group_hash | Somme de contrôle représentative de l'état du groupe |
| epoch | Numéro d'époque associé à l'état du groupe |
| app_state | Etat du groupe |

Le champ « type » est un identifiant permettant d'identifier que le message en question est un message « GroupState ».

Le champ « group_id » est un identifiant permettant d'identifier le groupe dont l'état est décrit.

Le champ « group_hash » est une somme de contrôle représentative de l'état du groupe identifié par le champ « group_id », tel que connu du dispositif émetteur du message. Cette somme de contrôle est calculée en utilisant une fonction de hachage telle que CRC32, MD5 ou SHA. Le champ « group_hash » peut être omis et les dispositifs qui en ont besoin peuvent calculer la somme de contrôle eux-mêmes à partir de l'état décrit dans le champ « app_state ».

Le champ « epoch » est un champ optionnel qui fournit le numéro d'époque déjà évoqué.

Le champ « app_state » est un champ décrivant l'état du groupe, i.e. les paramètres définissant ledit état (e.g. volume de lecture audio, état de lecture, URI du flux audio en cours de lecture). Comme indiqué précédemment les paramètres contenus dans ce champ dépendent de l'application (e.g. audio seul, vidéo seule, audio-vidéo).

A réception du message « GroupState », toute autre dispositif du groupe en attente de l'expiration de son temps d'attente, e.g. l'enceinte 22, interrompt son temps attente et n'envoie pas lui-même de message « GroupState ». Le temps d'attente de durée aléatoire permet donc d'éviter une multiplication d'envois de messages « GroupState » de la part de tous les dispositifs du groupe ayant reçu le message « RequestState », car seul le dispositif qui a tiré la durée la plus courte répond au message « RequestState » par un message « GroupState ». Les autres membres du groupe reçoivent ce message « GroupState » avant que leur propre temps d'attente n'expire et ignorent donc le message « RequestState » reçu.

En variante, un UUID « générique » différent des UUID de tous les groupes est défini. Si le champ « group_id » du message « RequestState » a une valeur égale à l'UUID générique, alors le dispositif du groupe qui le reçoit envoie un message « GroupState » décrivant son état. Si le message « RequestState » est reçu en unicast, la réponse est envoyée immédiatement. Si le message est reçu en multicast, alors un des dispositifs qui le reçoit répond par un message « GroupState » selon le principe décrit dans le paragraphe précédent (i.e. tirage aléatoire des temps d'attente). Cette variante permet par exemple de découvrir l'état des groupes, ou d'interroger spécifiquement un dispositif sur son état (dans ce cas le message est envoyé en unicast), par exemple pour effectuer des vérifications de cohérence.

L'enceinte 21 qui reçoit le message « GroupState » envoyé par l'enceinte 20 adopte l'état du groupe compris dans le champ « app_state » si elle ne connaissait pas l'état du groupe avant (e.g. parce qu'elle vient de démarrer ou parce qu'elle vient de perdre un vote). Si elle connaissait l'état du groupe et que les sommes de contrôle (« group_hash » et « current_hash » qui est représentative de l'état du groupe connu de l'enceinte 21) ne sont pas égales, alors elle peut soit adopter l'état du groupe compris dans le champ « app_state », soit déclencher une procédure de vote. Adopter l'état du groupe comprend mémoriser ledit état du groupe et exécuter des actions pour se mettre dans ledit état de groupe, e.g. mettre le volume audio de l'enceinte à la valeur spécifiée dans le champ « app_state » dudit message.

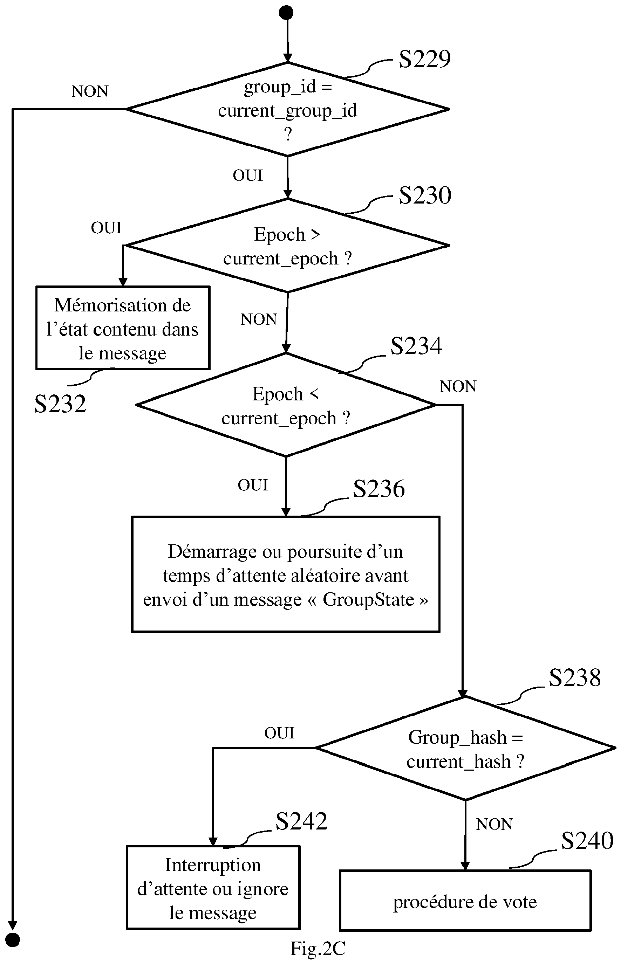

Si le message comprend un champ « epoch », l'enceinte 21 qui reçoit le message « GroupState » envoyé par l'enceinte 20 adopte l'état du groupe compris dans le champ « app_state » dudit message selon la procédure décrite ci-après en référence à le Fig. 2C.

Lors d'une étape S229, l'enceinte 21 compare l'identifiant « current_group_id » du groupe auquel elle appartient, lequel est stocké en mémoire, avec le champ « group_id » du message reçu. Si les valeurs sont différentes, alors le message est ignoré. Si le champ « group_id » est égal à « current_group_id », alors le procédé continue à une étape S230.

Lors de l'étape S230, l'enceinte 21 détermine si le champ « epoch » du message « GroupState » est strictement supérieur au numéro d'époque, appelée « current_epoch », telle que connue par l'enceinte 21. Si la valeur du champ « epoch » est supérieure à la valeur de « current_epoch », alors l'enceinte 21 adopte, lors d'une étape S232, l'état du groupe compris dans le champ « app_state ». En variante, l'enceinte 21 déclenche une procédure de vote. En variante, l'enceinte 21 vérifie si elle est sur le point de changer d'état (par exemple parce que le flux en cours de lecture arrive à son terme) et si l'état décrit par le message « GroupState » correspond au nouvel état qu'elle est sur le point de prendre, auquel cas elle ne fait rien et attend juste son changement d'état. Si la valeur du champ « epoch » est inférieure ou égale à la valeur de « current_epoch », alors le procédé continue à une étape S234.

Lors de l'étape S234, l'enceinte 21 détermine si la valeur du champ « epoch » est strictement inférieure à la valeur de « current_epoch ». Si tel est le cas, alors l'enceinte 21 démarre, lors d'une étape S236, un temps d'attente de durée aléatoire avant d'envoyer elle-même un message « GroupState » comme si elle avait reçu un message « RequestState » ou, si l'enceinte 21 était déjà dans un tel temps d'attente, elle poursuit l'attente en cours. En variante, l'enceinte 21 déclenche une procédure de vote. En variante, l'enceinte 21 vérifie si elle vient de changer d'état et si l'état décrit par le message « GroupState » correspond à l'état précédent du groupe tel qu'elle le connaissait, auquel cas elle ignore le message « GroupState ».

Sinon, i.e. si la valeur du champ « epoch » est égale à la valeur de « current_epoch », alors l'enceinte 21 compare, lors d'une étape S238, le champ « group_hash » du message avec la somme de contrôle « current_hash » représentative de l'état du groupe connu de l'enceinte 21. Si les deux valeurs sont différentes, alors l'enceinte 21 déclenche, lors d'une étape S240, une procédure de vote. Sinon,lors d'une étape S242, si l'enceinte 21 est en phase d'attente avant d'envoyer elle-même un message « GroupState, » alors elle interrompt son attente sans envoyer de message. Sinon elle ignore le message reçu et ne fait rien.

### Synchronisation d'un dispositif, e.g. enceinte connectée, avec un groupe

### Mode de réalisation 1

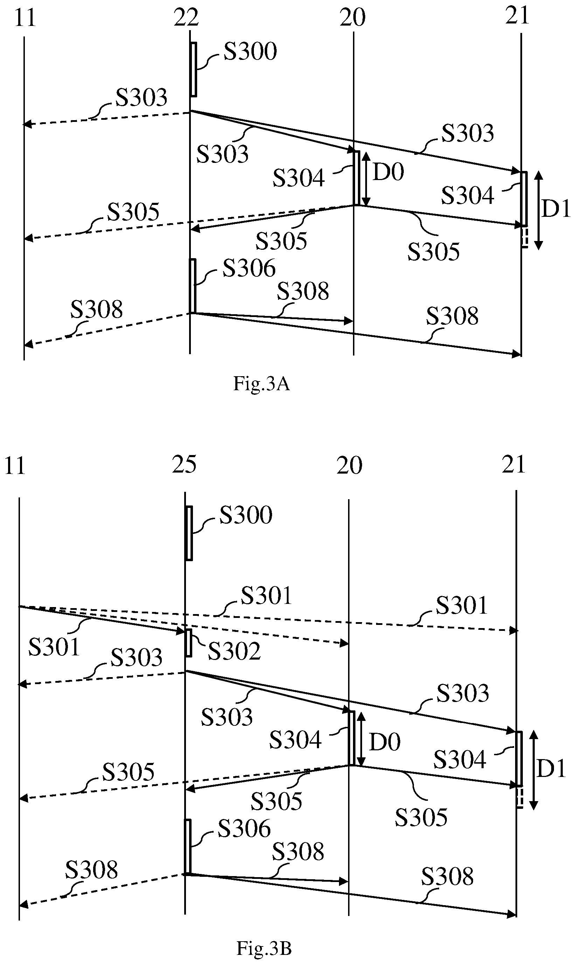

La Fig.3A illustre, selon un mode particulier de réalisation, un procédé de synchronisation d'un dispositif, e.g. une enceinte connectée ou un contrôleur, avec un groupe de dispositifs tel que défini en lien avec la Fig. 1 auquel il appartenait préalablement, e.g. avant son extinction. Par exemple, le dispositif à synchroniser est l'enceinte connectée 22 qui a été éteinte et qui appartenait préalablement au groupe d'enceintes connectées GRPO qui comprenait en outre les enceintes 20 et 21. Lors de son rallumage, l'enceinte 22 doit être à nouveau synchronisée avec le groupe GRPO.

Lors d'une étape S300, l'enceinte 22 est allumée, e.g. par un utilisateur. Lorsqu'elle démarre, l'enceinte 22 ne connaît pas l'état actuel du groupe GRPO. En effet, lorsque l'enceinte 22 était éteinte, l'état du groupe GRPO a pu évoluer, e.g. parce que des commandes ont été envoyées.

Lors d'une étape S303, l'enceinte 22 envoie un message « RequestState » en multicast afin qu'il soit reçu par l'ensemble des dispositifs du groupe GRPO, à savoir dans l'exemple de la Fig. 3A, les enceintes connectées 20 et 21 et le cas échéant le contrôleur 11. Ce message « RequestState », qui est envoyé par un dispositif pour demander aux membres d'un groupe l'état actuel dudit groupe, comprend l'identification du groupe GRPO.

Lors de la réception du message « RequestState » (étape S304), les enceintes connectées 20 et 21 (qui appartiennent donc au groupe GRPO identifié par le message « RequestState ») et le contrôleur 11 s'il est membre du groupe GRPO tirent aléatoirement un temps d'attente comme déjà évoqué et attendent en conséquence avant d'envoyer une réponse au message « RequestState » reçu.

Lors d'une étape S305, le dispositif dont le temps d'attente a fini de s'écouler en premier envoie un message « GroupState » en multicast, afin de donner aux autres dispositifs du groupe le détail de sa vision de l'état du groupe. Dans l'exemple de la Fig. 3A, c'est l'enceinte 20 qui envoie ce message à la fin du temps d'attente D0. Le message « GroupState » envoyé en multicast est reçu par l'ensemble des dispositifs du groupe GRPO et notamment par l'enceinte 21.

A réception du message « GroupState », l'enceinte 21 et le cas échéant le contrôleur 11 interrompent leurs temps d'attente. Notamment, l'enceinte 21 reçoit le message « GroupState » envoyé par l'enceinte 20 à l'étape S305 avant que son propre temps d'attente n'expire et ignore donc le message « RequestState » reçu.

Lors d'une étape S306, l'enceinte 22 reçoit le message « GroupState » et adopte l'état du groupe compris dans le champ « app_state » dudit message.

Lors d'une étape S308, l'enceinte 22 envoie en multicast un message « StateChange » afin d'informer les dispositifs du groupe GRPO de son changement d'état suite à sa synchronisation sur l'état du groupe GRPO. Ce message est une version simplifiée du message décrit précédemment en référence à la Fig. 2A. Notamment les champs « old_hash » et « app_command » sont absents.

Selon une variante de réalisation, le contrôleur 11 peut s'abonner au « groupe multicast » afin de recevoir les messages « RequestState », « GroupState » et « StateChange » même s'il ne fait pas lui-même partie du groupe GRPO qu'il contrôle. Ainsi, il peut suivre le déroulement de la synchronisation de l'enceinte 22. Le contrôleur 11 peut le cas échéant afficher un message à l'utilisateur une fois que la synchronisation est terminée, i.e. une fois qu'il a reçu le message « StateChange » indiquant que l'enceinte 22 a changé d'état suite à sa synchronisation sur l'état du groupe GRPO.

### Mode de réalisation 2

La Fig.3B illustre, selon un mode particulier de réalisation, un procédé de rattachement d'un nouveau dispositif, e.g. une enceinte connectée, à un groupe de dispositifs tel que défini en lien avec la Fig. 1 auquel il n'appartenait préalablement pas. Par exemple, le dispositif à rattacher est une nouvelle enceinte connectée 25 qui n'appartenait préalablement à aucun groupe et était éteinte.

Les étapes de la Fig. 3B identiques à celles de la Fig. 3A sont identifiées à l'aide des mêmes références numériques. Notamment, le procédé de rattachement et de synchronisation d'un nouveau dispositif comprend les étapes S300 à S308.

Le procédé comprend, en outre, suite l'étape S300, une étape S301 lors de laquelle le contrôleur 11 envoie un message de rattachement, appelé « Join », à l'enceinte 25. Ce message comprend un identifiant du groupe et un identifiant du dispositif à rattacher, en l'occurrence un identifiant de l'enceinte 25. Le message « Join » est donc envoyé par le contrôleur 11 pour demander à l'enceinte 25 de rejoindre le groupe GRPO. Le message « Join » est un message unicast, c'est-à-dire à la seule destination de l'enceinte 25, ou un message multicast adressé à l'ensemble des dispositifs du groupe GRPO comme illustré sur la Fig. 3B.

Lors d'une étape S302, l'enceinte 25 reçoit le message « Join » et compare son identifiant avec l'identifiant du dispositif à rattacher présent dans le message « Join ». Dans l'exemple de la Fig. 3B, ces identifiants étant identiques, et l'enceinte 25 rejoint le groupe identifié par l'identifiant du groupe présent dans le message « Join ».

Dans le cas multicast, le message « Join » est reçu par tous les dispositifs du groupe, i.e. notamment par les enceintes 20 et 21. Or, l'identifiant du dispositif à rattacher présent dans le message « Join » est différent de l'identifiant des enceintes 20 et 21. Ces enceintes 20 et 21 peuvent soit ignorer le message ou l'utiliser afin de mémoriser le fait que le nouveau dispositif, en l'occurrence l'enceinte 25, fait maintenant partie du leur groupe GRPO.

Un exemple de message « Join » comprenant 3 champs est décrit dans le tableau ci-dessous :

| Nom | Description |
|---|---|
| type | Type de message |
| device_id | Identifiant de dispositif, e.g. d'une enceinte |
| group_id | Identifiant de groupe |

Le champ « type » est un identifiant permettant d'identifier que le message en question est un message « Join ».

Le champ « device_id » est un identifiant permettant d'identifier le dispositif destinataire du message, e.g. l'enceinte 25.

Le champ « group_id » est un identifiant permettant d'identifier le groupe auquel rattacher le dispositif identifié par le champ « device_id ».

### Sortie d'un groupe

De la même manière qu'un dispositif peut être rattaché à un groupe, un dispositif peut quitter un tel groupe. Dans ce cas, un message de détachement, appelé « Leave », est utilisé.

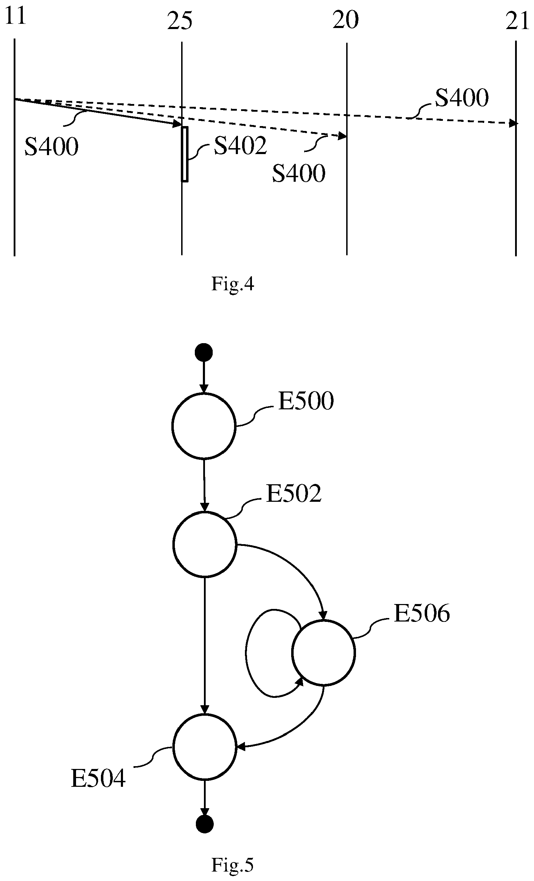

La Fig. 4 illustre un procédé de sortie d'un dispositif, e.g. l'enceinte connectée 25, d'un groupe selon un mode particulier de réalisation.

Lors d'une étape S400, le contrôleur 11 envoie un message « Leave » à l'enceinte 25 comprenant un identifiant de groupe et un identifiant du dispositif qui doit quitter le groupe en question, en l'occurrence de l'enceinte 25. Le message « Leave » est donc envoyé par le contrôleur 11 pour demander à l'enceinte 25 de quitter le groupe GRPO. Le message « Leave » est un message unicast, c'est-à-dire à la seule destination de l'enceinte 25, ou un message multicast adressé à l'ensemble des dispositifs du groupe GRPO comme illustré sur la Fig. 4.

Lors d'une étape S402, l'enceinte 25 reçoit le message « Leave » et compare son identifiant avec l'identifiant du dispositif présent dans le message « Leave ». Dans l'exemple de la Fig. 4, ces identifiants étant identiques, l'enceinte 25 quitte le groupe identifié par l'identifiant du groupe présent dans le message « Leave ». L'enceinte 25 efface de sa mémoire les informations concernant le groupe GRPO et stoppe toute action potentiellement en cours (e.g. lecture en cours) dans le cadre de son appartenance au groupe GRPO.

Dans le cas particulier où l'identifiant du groupe présent dans le message « Leave » est différent de l'identifiant du groupe auquel appartient l'enceinte 25, alors l'enceinte 25 ignore le message reçu. Optionnellement, l'enceinte 25 envoie un message d'erreur au contrôleur 11. Ce cas peut se produire par exemple si un deuxième contrôleur, e.g. le contrôleur 12 sur la Fig. 1, a demandé à l'enceinte 25 de changer de groupe (détachement d'un premier groupe grâce à un message « Leave » puis rattachement à un deuxième groupe grâce à un message « Join ») entre le moment où le contrôleur 11 a déterminé le groupe de l'enceinte 25 et le moment où l'enceinte 25 reçoit l'ordre du contrôleur 11 de quitter ledit groupe.

Dans le cas multicast, le message « Leave » est reçu par tous les dispositifs du groupe, i.e. notamment par les enceintes 20 et 21. Or, l'identifiant du dispositif qui doit quitter le groupe, présent dans le message « Leave » est différent de l'identifiant de chacune des enceintes 20 et 21. Ces enceintes 20 et 21 peuvent soit ignorer le message ou l'utiliser afin de mémoriser le fait que le dispositif identifié par le message « Leave », en l'occurrence l'enceinte 25, a maintenant quitté leur groupe. L'enceinte 25 ayant quitté le groupe, des flux différents peuvent être joués sur cette enceinte. A cet effet, elle peut rester seule ou bien être intégrée dans un autre groupe que celui qu'elle vient de quitter.

Un exemple de message « Leave » comprenant 3 champs est décrit dans le tableau ci-dessous :

| Nom | Description |
|---|---|
| type | Type de message |
| device_id | Identifiant de dispositif, e.g. d'une enceinte |
| group_id | Identifiant de groupe |

Le champ « type » est un identifiant permettant d'identifier que le message en question est un message « Leave ».

Le champ « device_id » est un identifiant permettant d'identifier le dispositif destinataire du message, e.g. l'enceinte 25.

Le champ « group_id » est un identifiant permettant d'identifier le groupe que le dispositif identifié par le champ « device_id » doit quitter.

### Mise en veille (persistance de l'état du groupe)

Le fait d'éteindre une enceinte peut détériorer l'expérience de l'utilisateur. En effet, si cette enceinte était le seul dispositif du groupe ayant connaissance de l'état du groupe alors cet état est perdu. Un contrôleur qui est membre du groupe peut jouer un rôle de « mémoire » afin d'assurer la persistance de l'état du groupe et ainsi pallier le fait que l'enceinte a été éteinte. Dans le cas où le contrôleur n'est pas membre du groupe ou lorsque l'utilisateur change de contrôleur en passant d'une pièce à une autre, le contrôleur ne peut pas jouer ce rôle de « mémoire » afin d'assurer la persistance de l'état du groupe. Dans ces cas, le procédé de mise en veille décrit en lien avec la Fig. 5 est donc avantageusement utilisé.

La Fig. 5 illustre, sous la forme d'une machine d'état, un procédé de mise en veille d'un dispositif d'un groupe donné, e.g. l'enceinte 25, selon un mode particulier de réalisation.

Dans un état E500, l'enceinte 25 éteint uniquement les services et composants nécessaires à une activité opérationnelle (e.g. ses amplificateurs audio) à l'exception des services et composants nécessaires aux communications réseau. Une activité opérationnelle est une activité de traitement effectuée par le dispositif. Elle ne comprend pas une notification d'état du dispositif éteint tel que par exemple une LED pour notification du "dispositif éteint". Le cas échéant, l'enceinte 25 effectue également des changements d'interface utilisateur (e.g. extinction et/ou allumage de LED témoin, changement de luminosité ou extinction d'un afficheur ou d'un écran, etc.). Elle passe dans un état E502.

Dans l'état E502, l'enceinte 25 détecte si au moins un autre dispositif du groupe est présent sur le réseau local LAN. Cette détection peut se faire à l'aide d'un message « Discover » auquel les éventuels membres du groupe présents répondent par un message « Advertise ». Les messages « Discover » et « Advertise » contiennent l'identifiant du groupe concerné. La détection de présence d'au moins un autre dispositif du groupe peut aussi être faite à l'aide d'un protocole existant tel que multicast DNS (acronyme anglais de « Domain Name System ») ou tel que le protocole de découverte SSDP (acronyme anglais de « Simple Service Discovery Protocol ») de UPnP (acronyme anglais de « Universal Plug and Play »).

Si l'enceinte 25 détecte qu'au moins un autre dispositif du groupe est présent sur le réseau local LAN, elle passe dans un état E504, sinon elle passe dans un état E506. Dans l'état E504, l'enceinte 25 termine de s'arrêter en éteignant les services et composants nécessaires aux communications réseau. En effet, un autre dispositif du groupe étant présent sur le réseau local LAN, il peut le cas échéant informer de l'état du groupe.

Dans l'état E506, l'enceinte 25 attend de recevoir un message provenant d'un autre dispositif du groupe, e.g. d'un dispositif qui viendrait de démarrer. Si elle reçoit un message « RequestState », elle envoie un message « GroupState » et elle passe à l'état E504. Il n'est pas nécessaire ici d'attendre avant d'envoyer le message « GroupState » puisque, a priori, s'il y avait eu un autre dispositif susceptible de répondre, l'enceinte 25 se serait éteinte directement.

Si l'enceinte 25 reçoit un message « Discover » ou équivalent, l'enceinte 25 répond par un message « Advertise » ou équivalent et reste dans l'état E506.

Si l'enceinte 25 reçoit un autre message provenant d'un autre dispositif du groupe, et en particulier si ledit message (e.g. un message « GroupState ») montre que ledit autre dispositif du groupe connaît l'état du groupe, alors elle passe dans l'état E504.

Optionnellement, au bout d'un certain délai prédéfini (par exemple 10 minutes) dans l'état E506, l'enceinte 25 passe dans l'état E504.

Dans le cadre de ce procédé de mise en veille, tous les services et composants non essentiels de l'enceinte 25 sont coupés (par exemple les amplificateurs audio), mais les services et composants nécessaires aux communications réseau sont maintenus allumés. Ainsi l'enceinte 25 reste disponible pour répondre à un message « RequestState » envoyé par l'enceinte 20 ou 21 lors de son démarrage.

Ainsi, si l'utilisateur écoute de la musique sur cette enceinte 25 dans la salle de bain SDB et que les enceintes 20, 21 et 22 sont éteintes, ces dernières ne peuvent pas recevoir de messages de mise à jour de l'état du groupe envoyés par l'enceinte 25. Si par la suite l'utilisateur quitte la salle de bain SDB pour aller dans le salon et allume les enceintes 20 et 21 quand il entre dans le salon, ces dernières envoient un message « RequestState » quand elles démarrent afin d'obtenir le dernier état du groupe GRPO conformément au procédé décrit en référence à la Fig. 2A. Comme l'enceinte 25 est mise en veille et non éteinte, les enceintes 20 et 21 obtiennent l'état du groupe GRPO tel que connu de l'enceinte 25 juste avant que l'utilisateur ne change de pièce. Si l'enceinte 25 avait été éteinte et non mise en veille, les enceintes 20 et 21 auraient démarré avec un état par défaut, par exemple le dernier état du groupe qu'elles connaissaient avant de s'arrêter.

### Lecture synchronisée

Lorsque les dispositifs d'un groupe sont des enceintes audio (respectivement des dispositifs de reproduction vidéo), il est souhaitable que ces enceintes (respectivement des dispositifs de reproduction vidéo) jouent le son (respectivement la vidéo) de manière synchronisée.

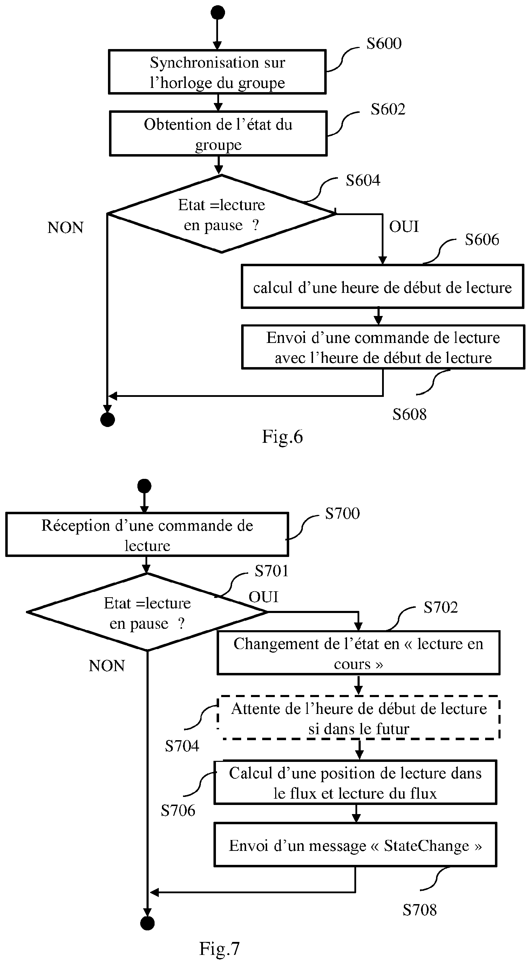

La Fig. 6 illustre un procédé de démarrage d'une lecture synchronisée d'un flux audio tel que mis en œuvre côté contrôleur, selon un mode particulier de réalisation.

Lors d'une étape S600, le contrôleur 11 se synchronise sur l'horloge du groupe GRPO.

Lors d'une étape S602, le contrôleur 11 obtient un état actuel du groupe GRPO. Par exemple, le contrôleur 11 envoie un message « RequestState » et attend le message « GroupState » correspondant. Alternativement, le contrôleur 11 est membre du groupe GRPO et connaît donc l'état du groupe du fait d'échanges de messages antérieurs au sein du groupe.

Les étapes S600 et S602 peuvent être inversées, i.e. S602 peut être effectuée avant S600, ou exécutées en parallèle.

Lors d'une étape S604, le contrôleur 11 vérifie si le groupe est dans un état « Lecture en pause ». Si le groupe est dans un état « Lecture en pause », le contrôleur 11 passe à une étape S606, sinon le contrôleur 11 termine le procédé et optionnellement affiche un message d'erreur pour informer l'utilisateur.

Lors de l'étape S606, le contrôleur 11 soustrait la position courante du flux (telle que présente dans l'état du groupe dans un mode de réalisation particulier) de l'heure actuelle donnée par l'horloge utilisée par le groupe, pour calculer l'heure de début de lecture. Optionnellement, le contrôleur ajoute un délai à l'heure de début de lecture afin de prendre en compte les temps de propagation des messages sur le réseau local LAN. Par exemple, le délai est inférieur à 100 ms et vaut 40 ms. Ces valeurs tiennent compte uniquement du temps de propagation de la commande sur le réseau local LAN, et pas du temps éventuellement nécessaire aux lecteurs pour obtenir les données du flux depuis la source. Dans certains cas, par exemple si l'URI du flux audio à jouer a été changé juste avant la commande de lecture, un délai plus important (par exemple 500 ms) est préférentiellement utilisé.

Lors d'une étape S608, le contrôleur 11 envoie une commande « Play » contenant l'heure de début de lecture calculée à l'étape S606. Cette commande est envoyée en multicast par le contrôleur 11 à tous les dispositifs du groupe pour démarrer la lecture du flux actuel de manière synchronisée. Par exemple, cette commande est incluse dans le champ «app_command » d'un message « Command » ou « StateChange ».

Un exemple de commande « Play » comprenant 2 champs est décrit dans le tableau ci-dessous :

| Nom | Description |
|---|---|
| command | Identifiant de commande |
| start_time | Heure de début de lecture du flux |

Le champ « command » identifie le type de commande, en l'occurrence qu'il s'agit d'une commande « Play ».

Le champ « start_time » désigne l'heure de début de lecture du flux calculée à l'étape S606. Si cette heure est dans le futur, ceci permet à tous les dispositifs de démarrer simultanément.

L'heure indiquée par le champ « start_time » peut être passée au moment où la commande « Play » est envoyée et *a fortiori* au moment où la commande « Play » est reçue. Dans ce cas, les dispositifs ignorent la portion du flux située dans le passé et commencent directement la lecture à la position correspondant à l'heure actuelle. Dans tous les cas, le champ « start_time » est indispensable pour fixer la référence de temps permettant de synchroniser la lecture.

La Fig. 7 illustre, selon un mode particulier de réalisation, un procédé de démarrage d'une lecture synchronisée d'un flux, tel que mis en œuvre par une enceinte 25 qui reçoit, lors d'une étape S700, une commande « Play » du contrôleur 11.

Lors d'une étape S701, l'enceinte 25 vérifie que le groupe est bien dans un état « Lecture en pause ». Si le groupe est bien dans un état « Lecture en pause », elle passe à une étape S702, sinon elle termine le procédé. Optionnellement, elle déclenche une procédure de vote. Une telle procédure est décrite en lien avec les Figs 10 à 13.

Lors d'une étape S702, l'enceinte 25 change, en mémoire, l'état du groupe en « Lecture en cours » et mémorise dans l'état du groupe l'heure de début de lecture provenant du champ « start_time » de la commande « Play ». Puisqu'il y a changement de l'état du groupe, l'enceinte 25 incrémente le cas échéant le numéro d'époque.

Lors d'une étape optionnelle S704, l'enceinte 25 attend l'heure de début de lecture si elle est dans le futur.

Lors d'une étape S706, l'enceinte 25 calcule une position dans le flux en calculant la différence entre l'heure actuelle et l'heure de début de lecture, et commence à lire le flux à la position calculée.

Lors d'une étape S708, l'enceinte 25 envoie un message « StateChange » afin de notifier, aux autres dispositifs du groupe, son changement d'état suite à la prise en compte de la commande « Play ». Ce message comprend notamment une somme de contrôle représentative du nouvel état du groupe connu de l'enceinte 25.

Dans une variante de réalisation, si le groupe est déjà dans un état « Lecture en cours », l'étape S706 est appliquée en partie. L'enceinte 25 mémorise dans l'état du groupe la valeur du champ « start_time » de la commande et continue la lecture à partir d'une position calculée par différence entre l'heure actuelle et la valeur du champ « start_time » de la commande. Cette solution permet de déplacer la position actuelle dans le flux. A noter que, dans ce cas, les étapes S701, S702 et S704 sont ignorées par l'enceinte 25.

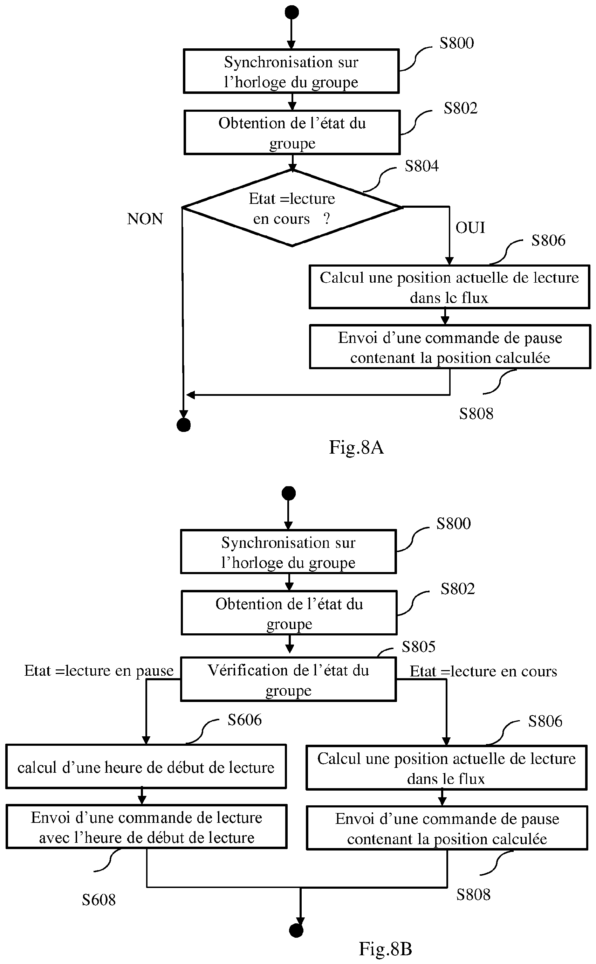

La Fig. 8A illustre un procédé de mise en pause d'une lecture synchronisée d'un flux, tel que mis en œuvre côté contrôleur, selon un mode particulier de réalisation.

Lors d'une étape S800, le contrôleur 11 se synchronise sur l'horloge du groupe GRPO. Cette étape est identique à l'étape S600.

Lors d'une étape S802, identique à l'étape S602, le contrôleur 11 obtient l'état actuel du groupe GRPO. Par exemple, le contrôleur 11 envoie un message « RequestState » et attend le message « GroupState » correspondant. Alternativement, le contrôleur 11 est membre du groupe GRPO et connaît donc l'état du groupe. Les étapes S800 et S802 peuvent être inversées, i.e. S802 peut être effectuée avant S800, ou exécutées en parallèle.

Lors d'une étape S804, le contrôleur 11 vérifie si le groupe GRPO est dans un état « Lecture en cours ». Si le groupe est dans un état « Lecture en cours », le contrôleur 11 passe à une étape S806, sinon le contrôleur 11 termine le procédé et optionnellement affiche un message d'erreur pour informer l'utilisateur.

Lors d'une étape S806, le contrôleur 11 calcule la position de lecture actuelle de lecture dans le flux en calculant la différence entre l'heure actuelle donnée par l'horloge du groupe et l'heure de début de lecture (présente dans l'état du groupe dans un mode de réalisation particulier). Optionnellement, le contrôleur décale la position de lecture afin de prendre en compte le temps de propagation des messages sur le réseau local LAN. Par exemple, la position de lecture est décalée d'un offset temporel inférieur à 100 ms, e.g. égal à 40 ms.

Lors d'une étape S808, le contrôleur 11 envoie une commande « Pause » contenant la position calculée à l'étape S806. Cette commande est envoyée en multicast par le contrôleur 11 à tous les dispositifs du groupe pour stopper la lecture du flux actuel de manière synchronisée. Par exemple, cette commande est incluse dans le champ «app_command » d'un message « Command » ou « StateChange ». Un exemple de commande « Pause » comprenant 2 champs est décrit dans le tableau ci-dessous :

| Nom | Description |
|---|---|
| command | Identifiant de commande |
| offset | Heure d'arrêt de la lecture |

Le champ « command » identifie le type de commande, en l'occurrence qu'il s'agit d'une commande de mise en pause de la lecture.

Le champ « offset » correspond à la position dans le flux auquel la lecture doit s'arrêter et est égale à la différence calculée à l'étape S806. Compte-tenu des temps de propagation des messages dans le réseau local LAN, les enceintes ne reçoivent pas la commande au même moment. La position d'arrêt est donc présente dans le message afin d'assurer que toutes les enceintes mémorisent la même position dans l'état du groupe lorsqu'elles s'arrêtent. En variante, la commande peut contenir l'heure de mise en pause de la lecture. Dans ce cas, ce sont les enceintes qui calculent la différence entre ladite heure de mise en pause et l'heure de début de lecture provenant de l'ancien état du groupe, afin d'obtenir la position à mémoriser dans le nouvel état du groupe.

Dans une variante de réalisation, les procédés décrits en référence aux Figs 6 et 8 sont combinés en un seul procédé illustré par la Fig. 8B permettant une bascule d'un état de « Lecture en cours » à un état de « Lecture en pause » et vice-versa. La bascule d'un état à l'autre se fait par exemple suite à l'appui par l'utilisateur sur un bouton du contrôleur 11. Ainsi, lors de l'étape S800, le contrôleur 11 se synchronise sur l'horloge du groupe GRPO. Lors de l'étape S802, le contrôleur 11 obtient un état actuel du groupe GRPO. Par exemple, le contrôleur 11 envoie un message « RequestState » et attend le message « GroupState » correspondant. Alternativement, le contrôleur 11 est membre du groupe GRPO et connaît donc l'état du groupe du fait d'échanges de messages antérieurs au sein du groupe.

Lors de l'étape S805, le contrôleur 11 vérifie l'état du groupe. Si le groupe est dans un état « Lecture en pause », le contrôleur 11 passe à l'étape S606, puis S608. Si le groupe est dans un état « Lecture en cours », le contrôleur 11 passe à l'étape S806 puis S808.

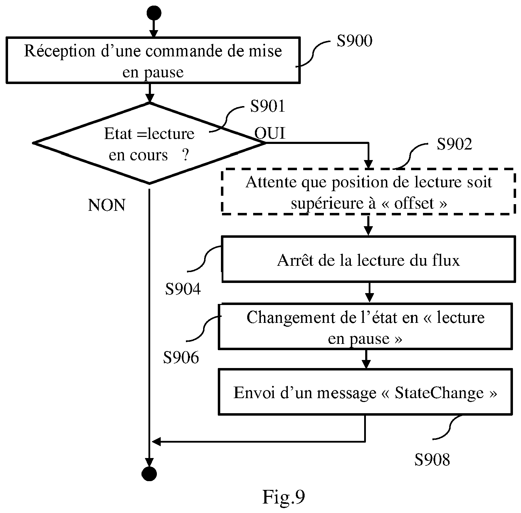

La Fig. 9 illustre, selon un mode particulier de réalisation, un procédé de mise en pause d'une lecture synchronisée d'un flux, tel que mis en œuvre par une enceinte 25 qui reçoit, lors d'une étape S900, une commande « Pause » du contrôleur 11.

Lors d'une étape S900, l'enceinte 25 reçoit une commande « Pause » du contrôleur 11.

Lors d'une étape S901, l'enceinte 25 vérifie que le groupe est bien dans un état « Lecture en cours ». Si le groupe est bien dans un état « Lecture en cours », elle passe à une étape optionnelle S902, sinon elle termine le procédé. Optionnellement, elle déclenche une procédure de vote.

Lors de l'étape optionnelle S902, l'enceinte 25 attend que la position de lecture courante soit supérieure ou égale à la position définie par le champ « offset » de la commande « Pause ».

Lors de l'étape S904, l'enceinte 25 arrête la lecture du flux.

Lors de l'étape S906, l'enceinte 25 change l'état du groupe en « Lecture en pause » et mémorise dans l'état du groupe la position de lecture provenant du champ « offset » de la commande. Puisqu'il y a changement de l'état du groupe, l'enceinte 25 incrémente le cas échéant le numéro d'époque.

Lors de l'étape S908, l'enceinte 25 envoie un message « StateChange » afin de notifier, aux autres dispositifs du groupe, son changement d'état suite à la prise en compte de la commande « Pause ». Ce message comprend notamment une somme de contrôle représentative du nouvel état du groupe connu de l'enceinte 25.

Dans une variante de réalisation, si le groupe est déjà dans un état « Lecture en pause », l'étape S906 est appliquée en partie. Ainsi, l'enceinte 25 mémorise dans l'état du groupe la position de lecture provenant du champ « offset » de la commande. Cette solution permet de déplacer la position actuelle dans le flux, même si la lecture est déjà en pause. A noter que dans ce cas les étapes S901, S902 et S904 sont ignorées par l'enceinte 25.

Dans les modes de réalisations décrits en lien avec les Figs 6 à 9, la lecture d'un flux ou sa mise en pause est initiée par un contrôleur (e.g. le contrôleur 11). Dans une variante de réalisation, au moins certaines des enceintes connectées du système décrit en référence à la Fig. 1 implémentent certaines fonctionnalités d'un contrôleur (e.g. ajustement du volume du flux audio, lecture/mise en pause). En effet, certaines enceintes peuvent disposer de boutons permettant de changer le volume, et/ou un bouton permettant de basculer entre les états « Lecture en cours » et « Lecture en pause » même si ces enceintes n'implémentent pas de fonctionnalités plus avancées (e.g. gestion de liste de lecture) comme peut le faire le contrôleur 11. Il est donc avantageux que, pour ce sous-ensemble de fonctionnalités de contrôle offertes par l'enceinte, celle-ci se comporte comme un contrôleur.

Ainsi, lorsque l'utilisateur déclenche par exemple une mise en pause de la lecture directement sur une enceinte du groupe, cette enceinte peut envoyer une commande « Pause » pour donner l'ordre aux autres enceintes d'appliquer la commande. Dans ce cas, elle envoie aussi un message « StateChange » pour notifier son propre changement d'état aux autres dispositifs du groupe (y compris le cas échéant aux contrôleurs). Dans une variante, l'enceinte envoie uniquement un message « StateChange » incluant, dans le champ « app_command », la commande « Pause », ce qui permet à la fois de signifier le changement d'état lié à l'application de la commande en question et de donner l'ordre aux autres dispositifs du groupe d'exécuter eux aussi la commande.

Les flux audios à écouter sont avantageusement compilés grâce à une liste de lecture. Une liste de lecture est un ensemble d'identifiants de flux audio, de flux vidéo ou de flux audio/vidéo. Les flux identifiés dans la liste de lecture peuvent être lus séquentiellement, dans un ordre aléatoire ou selon une logique choisie par celui qui l'a composée.

Dans un mode de réalisation particulier, les listes de lectures sont gérées par des messages « Command » particuliers, tels que par exemple :
- un message « Command » d'ajout : les paramètres de la commande sont la position d'insertion, et une liste d'identifiants de flux à ajouter. Cette même commande peut donc être utilisée pour ajouter un seul identifiant de flux ou plusieurs, sans nécessiter de répéter l'opération pour chaque identifiant de flux à ajouter.
- un message « Command » d'effacement : les paramètres de la commande sont la position du premier élément (identifiant de flux) à effacer, et le nombre d'éléments à effacer. Cette même commande peut être utilisée pour effacer un seul identifiant de flux, plusieurs identifiants de flux, ou toute la liste de lecture.

### Procédure de vote

Dans un mode particulier de réalisation, les dispositifs d'un groupe envoient régulièrement des messages de synchronisation comportant la somme de contrôle représentative de l'état du groupe tel qu'ils le connaissent, afin de détecter plus rapidement des incohérences, en particulier en cas de perte temporaire des communications avec certains dispositifs du groupe. Avantageusement, chaque dispositif tire au hasard une durée (par exemple compris entre 25 et 35 secondes) puis envoie un message lorsque la durée est écoulée. Chaque fois qu'un dispositif reçoit (ou envoie) un message comportant la somme de contrôle représentative de l'état actuel du groupe, alors il réinitialise le délai. Ceci permet d'éviter une multiplication de messages redondants. Par exemple, le message de synchronisation peut être un message « StateChange » dans lequel le champ « old_hash » est omis, ou un message « StateChange » dans lequel les champs « old_hash » et « new_hash » sont égaux.

Comme vu précédemment, en cas de détection d'incohérence sur l'état d'un groupe au sein dudit groupe, une procédure de vote est déclenchée. Les Figs 10 à 13 décrivent différents modes de réalisation de cette procédure de vote.

Ainsi, lorsqu'un dispositif du groupe détecte une incohérence sur l'état dudit groupe, il envoie un message « Vote » aux autres dispositifs du groupe afin de déclencher la procédure de vote. L'objectif est de permettre à tous les dispositifs du groupe (e.g. les enceintes et le cas échéant le ou les contrôleurs) de se mettre d'accord sur un état de groupe commun et donc de supprimer l'incohérence détectée. La procédure de vote comprend un ou plusieurs tours de vote. À chaque tour, chaque dispositif envoie aux autres dispositifs du groupe un message « Vote » spécifiant l'état que le dispositif recommande pour le groupe. À la fin de chaque tour, chaque dispositif compte le nombre de votes reçus pour chaque état et sélectionne un nouvel état. La procédure s'arrête lorsque tous les dispositifs votent pour le même état dans un tour donné.

Un exemple de message « Vote » comprenant 5 champs est décrit dans le tableau ci-dessous :

| Nom | Description |
|---|---|
| type | Type de message |
| group_id | Identifiant de groupe |
| group_hash | Somme de contrôle représentative de l'état du groupe |
| epoch | Époque associée à l'état du groupe |
| round | Numéro de tour de vote |

Le champ « type » est un identifiant permettant d'identifier que le message en question est un message « Vote ».

Le champ « group_id » est un identifiant permettant d'identifier le groupe pour lequel la procédure de vote est déclenchée.

Le champ « group_hash » est une somme de contrôle représentative de l'état du groupe identifié par le champ « group_id » tel que recommandé par le dispositif envoyant le message.

Le champ « epoch » est un champ optionnel qui fournit le numéro d'époque déjà évoqué.

Le champ « round » est un numéro identifiant le tour de vote auquel le message « Vote » se réfère.

La Fig. 10 illustre une machine d'état mise en œuvre par un dispositif du groupe, e.g. l'enceinte 20, pour déclencher puis participer à une procédure de vote, selon un mode particulier de réalisation.

Dans un état E600, l'enceinte 20 obtient et sélectionne la somme de contrôle représentative de l'état du groupe et le numéro d'époque associé tels qu'elle les connaît, e.g. tels que stockés dans sa mémoire. L'enceinte 20 initialise aussi un numéro de tour courant à 0. L'enceinte 20 passe ensuite à un état E602.

Dans l'état E602, l'enceinte 20 envoie un message « Vote » comportant la somme de contrôle et le numéro d'époque sélectionnés, ainsi que le numéro de tour courant. L'enceinte 20 passe ensuite à un état E603. Les autres dispositifs du groupe font de même de leur côté.

Dans l'état E603, l'enceinte 20 reçoit des messages « Vote ». Pour chaque message « Vote » reçu dont le champ « group_id » est égal à l'identifiant de son groupe et dont le champ « round » est égal au numéro de tour courant, l'enceinte 20 incrémente un compteur correspondant à la paire de champs « group_hash » / « epoch » spécifiés dans le message « Vote ». Les messages « Vote » reçus dont le champ « group_id » est différent de l'identifiant de son groupe sont ignorés.

Dans le cas particulier où l'état du groupe connu de l'enceinte 20 change pendant que l'enceinte 20 est dans l'état E603, alors l'enceinte 20 passe immédiatement dans un état E607. L'état du groupe connu de l'enceinte 20 peut changer, par exemple, si l'utilisateur change le volume de l'enceinte 20 pendant qu'elle se trouve dans l'état E603. L'état du groupe connu de l'enceinte 20 peut également changer si l'enceinte 20 finit de lire un flux audio et passe au flux suivant dans une liste de lecture.

Dans le cas particulier où l'enceinte 20 reçoit un message « Vote » dont le champ « group_id » est égal à l'identifiant de son groupe et dont le champ « round » est inférieur au numéro de tour courant, l'enceinte 20 ignore le message en question.

Dans le cas particulier où l'enceinte 20 reçoit un message « Vote » dont le champ « group_id » est égal à l'identifiant de son groupe et dont le champ « round » est supérieur au numéro de tour courant, l'enceinte 20 fixe le numéro de tour courant à la valeur du champ « round » du message « Vote » reçu, mémorise les champs « group_hash » et « epoch » du message « Vote » reçu et passe immédiatement dans un état E606.

Après un temps prédéterminé, par exemple 100 ms, le tour de vote se termine et l'enceinte 20 passe dans un état E604.

Dans l'état E604, l'enceinte 20 détermine si tous les votes reçus lors du tour courant désignent la même somme de contrôle (et donc le même état). Si c'est le cas alors l'enceinte 20 passe dans un état E608. Sinon l'enceinte 20 passe dans un état E605.

Dans l'état E605, l'enceinte 20 sélectionne une nouvelle somme de contrôle et une nouvelle époque. A cet effet, l'enceinte 20 cherche la paire somme de contrôle / époque, i.e. la paire de valeurs des champs « group_hash » / « epoch », qui a obtenu le plus de votes. S'il n'y en a qu'une, alors elle sélectionne cette paire. Si plusieurs paires ont obtenu le même nombre de votes, ce nombre étant supérieur à celui des autres paires, alors l'enceinte 20 cherche la paire qui a l'époque la plus élevée parmi celles-ci. S'il n'y en a qu'une, alors elle sélectionne celle-là. Si plusieurs paires sont en tête et ex-aequo aussi bien en nombre de votes qu'en valeur de l'époque, alors l'enceinte 20 sélectionne aléatoirement une paire parmi celles-ci.

En variante, la priorité accordée à l'époque et au nombre de votes est inversée. Dans ce cas, l'enceinte 20 choisit en priorité la paire qui a l'époque la plus élevée, puis elle départage les ex-aequo en choisissant la paire qui a reçu le plus grand nombre de votes, et s'il y a encore des ex-aequo, elle effectue un tirage au sort.

Dans l'état E605, l'enceinte 20 efface les compteurs de nombre de votes et incrémente le numéro de tour courant, puis retourne dans l'état E602 pour un nouveau tour de vote.

Dans l'état E606, l'enceinte 20 sélectionne une nouvelle somme de contrôle et une nouvelle époque de la même manière que pour l'état E605. Ensuite, l'enceinte 20 efface les compteurs de nombre de votes, puis incrémente le compteur correspondant à la paire somme de contrôle / époque qu'elle a mémorisée dans l'état E603. Ensuite, l'enceinte 20 retourne dans l'état E602 pour un nouveau tour de vote. Le numéro de tour courant a déjà été mis à jour dans l'état E603.

Dans l'état E607, l'enceinte 20 sélectionne la somme de contrôle représentative de l'état du groupe tel qu'elle le connaît et l'époque associée. En outre, l'enceinte 20 incrémente le numéro de tour courant et efface les compteurs de nombre de votes. L'enceinte 20 retourne ensuite à l'état E602 pour un nouveau tour de vote.

Dans l'état E608, l'enceinte 20 compare la somme de contrôle désignée avec la somme de contrôle représentative de l'état du groupe connu de l'enceinte 20. Si les deux sont égales, alors l'enceinte 20 passe à un état E609, sinon l'enceinte 20 passe à un état E611.

Dans l'état E609, l'enceinte 20 tire aléatoirement une durée relativement brève (par exemple inférieure à 100 ms). Si au cours de cette durée, l'enceinte 20 reçoit un message « GroupState » correspondant à l'état du groupe tel qu'elle le connaît, alors l'enceinte 20 sort de la machine d'état. Sinon l'enceinte 20 passe à un état E610.

Dans une variante de réalisation, les états E608 et E609 sont modifiés comme suit. Dans l'état E608, l'enceinte 20 compare la somme de contrôle désignée avec la somme de contrôle représentative de l'état du groupe tel qu'elle le connaît. Si les deux sommes de contrôle sont égales, alors l'enceinte 20 sort directement de la machine d'état, sinon l'enceinte 20 passe à un état E611. Dans l'état E611, l'enceinte 20 efface l'état du groupe qu'elle connaît, envoie un message « RequestState » puis sort de la machine d'état.

Dans l'état E610, l'enceinte 20 envoie un message « GroupState » correspondant à l'état du groupe tel qu'elle le connaît puis sort de la machine d'états.

Dans l'état E611, l'enceinte 20 attend de recevoir un message « GroupState » et adopte l'état contenu dans ce message puis envoie un message « StateChange » correspondant et sort de la machine d'états.

La procédure décrite en référence à la Fig. 10 considère le cas où l'enceinte 20 détecte elle-même une incohérence dans l'état du groupe et prend l'initiative de la procédure de vote. Dans le cas où un autre dispositif du groupe, e.g. l'enceinte 21, déclenche la procédure de vote, l'enceinte 20 est prévenue du déclenchement de la procédure de vote lorsqu'elle reçoit un message « Vote » envoyé ledit autre dispositif du groupe. Dans ce cas, l'enceinte 20 entre dans l'état E601. Dans cet état E601, l'enceinte 20 obtient et sélectionne la somme de contrôle représentative de l'état du groupe qu'elle connaît et l'époque associée. L'enceinte 20 initialise aussi le numéro de tour courant à la valeur du champ « round » du message « Vote » reçu. L'enceinte 20 initialise à la valeur 1 du compteur associé à la paire « group_hash » / « epoch » contenue dans le message « Vote » reçu. Ensuite, l'enceinte 20 passe dans l'état E602 et le reste de la procédure de vote se déroule comme décrit précédemment.

Le propre vote de l'enceinte 20 est pris en compte dans la procédure décrite ci-dessus en référence à la Fig.10. En effet, le message « Vote » comportant le propre vote de l'enceinte 20 est envoyé à tous les dispositifs abonnés au groupe multicast. Comme l'enceinte 20 est elle-même abonnée à ce groupe multicast, elle reçoit aussi une copie de son propre message « Vote » et comptabilise donc son propre vote. Dans le cas particulier où le réseau est configuré pour ne pas envoyer de copie d'un message multicast au dispositif source l'ayant envoyé, alors dans l'état E602, le dispositif émetteur (en l'occurrence l'enceinte 20) incrémente le compteur correspondant à la paire « somme de contrôle » / « époque » inscrite dans son propre vote. En variante, l'enceinte 20 peut comptabiliser son propre vote dans l'état E602 comme décrit précédemment, et vérifier l'adresse source des messages reçus dans l'état E603 afin d'ignorer ses propres messages « Vote ».

Dans la procédure décrite en référence à la Fig. 10, une époque associée à l'état du groupe est utilisée. L'utilisation de l'époque permet d'améliorer la qualité du choix vis-à-vis de l'utilisateur. En particulier, si l'incohérence qui a conduit au vote est due au fait que certains dispositifs n'ont pas reçu des commandes envoyées par un contrôleur, alors l'époque permet d'augmenter les chances que l'état final sélectionné soit celui des dispositifs qui ont reçu les commandes en question, puisque ceux-ci ont a priori une époque plus grande. En variante, l'époque n'est pas utilisée. Dans ce cas, dans les états E605 et E606, l'enceinte 20 choisit la somme de contrôle ayant reçu le plus grand nombre de votes, et départage les ex-aequo par tirage au sort.

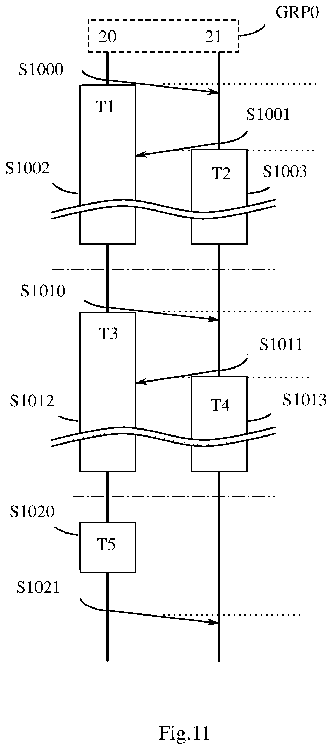

La Fig. 11 illustre des échanges de messages entre deux enceintes 20 et 21 d'un même groupe GPR0 lors d'une procédure de vote selon un mode particulier de réalisation. Le groupe en question peut comprendre d'autres enceintes et le cas échéant un ou des contrôleurs. Au début de la procédure de vote, les deux enceintes 20 et 21 ont de manière illustrative une vision différente de l'état du groupe. Ainsi, une valeur de somme de contrôle « Oxdeadbeef » est associée à l'état du groupe connu de l'enceinte 20 et une valeur de somme de contrôle « 0xbaadf00d » est associée à l'état du groupe connu de l'enceinte 21. Ces valeurs sont données à titre de simple exemple illustratif. Dans l'exemple de la Fig. 11, l'époque n'est pas utilisée.

La procédure de vote est initiée par l'enceinte 20 qui envoie, lors d'une étape S1000, un message « Vote » comportant l'identifiant du groupe GPR0, la somme de contrôle représentative de l'état du groupe connu de l'enceinte 20 (i.e. « Oxdeadbeef ») et un numéro de tour égal à 0.

L'enceinte 20 entame (étape S1002) un temps d'attente T1 afin de laisser aux autres dispositifs du groupe le temps de voter à leur tour.

En réponse au message « Vote » envoyé à l'étape S1000, l'enceinte 21 envoie, lors d'une étape S1001, un message « Vote » comportant l'identifiant du groupe GPR0, la somme de contrôle représentative de l'état du groupe connu de l'enceinte 21 (i.e. « 0xbaadf00d ») et un numéro de tour égal à 0.

L'enceinte 21 entame (étape S1003) elle aussi un temps d'attente T2 afin de laisser aux éventuels autres dispositifs du groupe le temps de voter. Dans une variante, si les enceintes 20 et 21 sont certaines qu'il n'y a pas d'autres dispositifs dans le groupe, elles peuvent interrompre l'attente immédiatement après avoir reçu les votes de tous les dispositifs connus. Cependant, une des causes possibles de désaccord sur l'état du groupe provenant de l'existence de dispositifs supplémentaires qui ne seraient connus que d'une partie des dispositifs du groupe, interrompre l'attente risque d'empêcher la prise en compte des votes de ces dispositifs inconnus.

Le premier tour de vote se termine à l'issue des temps d'attente T1 et T2. À ce moment-là, les deux enceintes 20 et 21 constatent que les deux sommes de contrôle (et donc les deux états possibles représentés par lesdites deux sommes de contrôle), sont ex-aequo avec chacune un vote.

L'enceinte 20 tire au hasard une somme de contrôle parmi lesdites deux sommes de contrôle. Par exemple, l'enceinte 20 ne change pas son vote. L'enceinte 20 envoie, lors d'une étape S1010, donc un nouveau message « Vote » comportant l'identifiant du groupe GPR0, la somme de contrôle tirée au hasard (i.e. « 0xdeadbeef ») et un numéro de tour égal à 1.

De même, l'enceinte 21 tire au hasard une somme de contrôle parmi lesdites deux sommes de contrôle. Par exemple, l'enceinte 21 change ainsi son vote. L'enceinte 21 envoie donc, lors d'une étape S1011, un nouveau message « Vote » comportant l'identifiant du groupe GPR0, la nouvelle somme de contrôle tirée au hasard (i.e. « 0xdeadbeef ») et un numéro de tour égal à 1.

Les enceintes 20 et 21 entament (étapes S1012 et S1013) de nouveaux temps d'attente (respectivement T3 et T4) afin de recevoir les votes des dispositifs du groupe.

Le deuxième tour de vote se termine à l'issue des temps d'attente T3 et T4. À ce moment-là, les deux enceintes 20 et 21 constatent qu'elles ont toutes les deux voté pour la même somme de contrôle (i.e. « Oxdeadbeef ») et les tours de vote se terminent.

L'enceinte 20 constate que la somme de contrôle à l'issue des tours de vote correspond à l'état du groupe tel qu'elle le connaissait avant le déclenchement de la procédure de vote.

Elle entame, lors d'une étape S1020, un temps d'attente T5 de durée aléatoire, puis envoie, lors d'une étape S1021, un message « GroupState » contenant l'état du groupe tel qu'elle le connaît. Ce temps d'attente permet éviter la multiplication des messages « GroupState » si plusieurs dispositifs ont gagné le vote. Par conséquent, si l'enceinte 20 est raisonnablement sûre qu'elle est la seule à connaître le bon état (par exemple parce qu'elle était la seule à voter pour cet état au premier tour), alors l'enceinte 20 peut envoyer le message « GroupState » immédiatement, i.e. que l'étape S1020 est omise.

L'enceinte 21 constate que la somme de contrôle à l'issue des tours de vote ne correspond pas à l'état du groupe tel qu'elle le connaissait avant le déclenchement de la procédure de vote. L'enceinte 21 attend alors de recevoir le message « GroupState ». A réception de ce message « GroupState », elle adopte le nouvel état du groupe et envoie, lors d'une étape S1022, un message « StateChange » pour notifier aux dispositifs du groupe qu'elle a changé d'état suite à l'adoption de l'état voté.

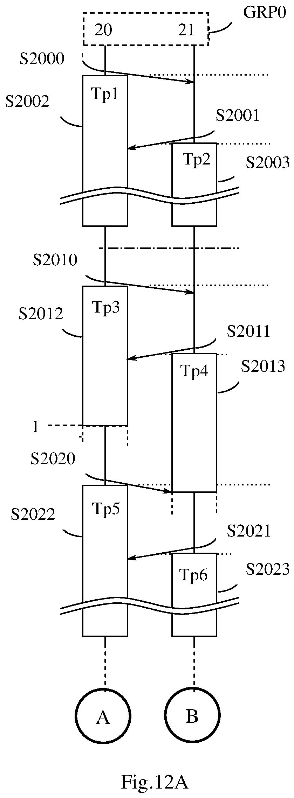

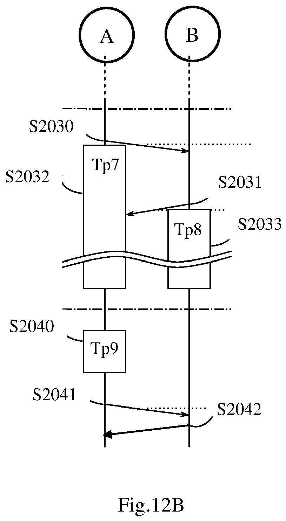

Les Figs 12A et 12B illustrent, selon un mode particulier de réalisation, des échanges de messages entre deux enceintes 20 et 21 d'un même groupe GRPO lors d'une procédure de vote dans le cas particulier où une des deux enceintes, en l'occurrence l'enceinte 20, change d'état au cours de la procédure de vote. Au début de la procédure de vote, les deux enceintes 20 et 21 ont de manière illustrative une vision différente de l'état du groupe. Ainsi, une valeur de somme de contrôle « Oxdeadbeef » est associée à l'état du groupe connu de l'enceinte 20 et une valeur de somme de contrôle « 0xbaadf00d » est associée à l'état du groupe connu de l'enceinte 21. Ces valeurs sont données à titre de simple exemple illustratif. En outre, dans cet exemple, les deux enceintes ont la même valeur pour l'époque (par exemple 12345).

La procédure de vote est initiée par l'enceinte 20 qui envoie, lors d'une étape S2000, un message « Vote » comportant l'identifiant du groupe GRPO, la somme de contrôle représentative de l'état du groupe connu de l'enceinte 20 (i.e. « Oxdeadbeef »), l'époque correspondante (i.e. 12345) et un numéro de tour égal à 0.

L'enceinte 20 entame (étape S2002) un temps d'attente Tp1 afin de laisser aux autres dispositifs du groupe le temps de voter à leur tour.

En réponse au message « Vote » envoyé à l'étape S2000, l'enceinte 21 envoie, lors d'une étape S2001, un message « Vote » comportant l'identifiant du groupe GRPO, la somme de contrôle représentative de l'état du groupe connu de l'enceinte 21 (i.e. « 0xbaadf00d »), l'époque correspondante (i.e. 12345) et un numéro de tour égal à 0.

L'enceinte 21 entame (étape S2003) elle aussi un temps d'attente Tp2 afin de laisser aux éventuels autres dispositifs du groupe le temps de voter.

Le premier tour de vote se termine à l'issue des temps d'attente Tp1 et Tp2. À ce moment-là, les deux enceintes 20 et 21 constatent que les deux sommes de contrôle (et donc les deux états possibles représentés par lesdites deux sommes de contrôle), sont ex-aequo avec chacune une vote. Par ailleurs, les époques qui sont égales ne permettent pas de les départager.

L'enceinte 20 tire au hasard une somme de contrôle parmi lesdites deux sommes de contrôle. Par exemple, l'enceinte 20 ne change ainsi pas son vote. L'enceinte 20 envoie, lors d'une étape S2010, un nouveau message « Vote » comportant l'identifiant du groupe GRPO, la somme de contrôle tirée au hasard (i.e. « Oxdeadbeef »), l'époque associée (i.e. 12345) et un numéro de tour égal à 1.

De même, l'enceinte 21 tire au hasard une somme de contrôle parmi lesdites deux sommes de contrôle. Par exemple, l'enceinte 21 change ainsi son vote. L'enceinte 21 envoie, lors d'une étape S2011, un nouveau message « Vote » comportant l'identifiant du groupe GRPO, la somme de contrôle tirée au hasard (i.e. « Oxdeadbeef »), l'époque associée (i.e. 12345) et un numéro de tour égal à 1.

Les enceintes 20 et 21 entament (étapes S2012 et S2013) ensuite de nouveaux temps d'attente (respectivement Tp3 et Tp4) afin de recevoir les votes des dispositifs du groupe.

À un instant I, l'enceinte 20 change d'état. Par exemple, l'enceinte 20 a reçu une commande valable pour changer d'état. Puisque l'état de groupe connu de l'enceinte 20 a par conséquent changé, son numéro d'époque a été incrémenté et vaut maintenant 12346. La somme de contrôle représentative de ce nouvel état est, par exemple, « 0x600dcafe ». En réponse à ce changement d'état, l'enceinte 20 interrompt son temps attente Tp3 et passe immédiatement au tour de vote suivant en envoyant, lors d'une étape S2020, un nouveau message « Vote » comportant l'identifiant du groupe GRP0, la somme de contrôle représentative de son nouvel état (i.e. « 0x600dcafe »), l'époque associée (i.e. 12346) et un numéro de tour égal à 2.

L'enceinte 20 entame (étape S2022) un temps d'attente Tp5 afin de laisser aux autres dispositifs du groupe le temps de voter.

En réponse au message « Vote » envoyé à l'étape S2020, l'enceinte 21 interrompt elle aussi son temps d'attente Tp4 et analyse les votes qu'elle a reçus pour le premier tour de vote. Dans cet exemple, elle a reçu deux votes qui sont tous les deux d'accords pour choisir la somme de contrôle « Oxdeadbeef ». Par conséquent, l'enceinte 21 sélectionne cette somme de contrôle et envoie, lors d'une étape S2021, un message « Vote » comportant l'identifiant du groupe GRPO, la somme de contrôle sélectionnée (i.e. « Oxdeadbeef »), l'époque correspondante (i.e. 12345) et un numéro de tour égal à 2. Bien que les votes reçus lors du premier tour de vote aient été unanimes, l'enceinte 21 ne considère pas que le vote est terminé. Ce cas correspond au passage par l'état E606 dans la machine d'état décrite en référence à la Fig. 10.

L'enceinte 21 entame (étape S2023) ensuite un temps d'attente Tp6 afin de laisser aux autres dispositifs du groupe le temps de voter.

Le troisième tour de vote se termine à l'issue des temps d'attente Tp5 et Tp6. À ce moment-là, les deux enceintes 20 et 21 constatent que les deux sommes de contrôle (i.e.

« Oxdeadbeef » et « 0x600dcafe ») sont ex-aequo avec chacune un vote. Cependant, l'état correspondant à la somme de contrôle « 0x600dcafe » a une époque supérieure. Par conséquent les deux enceintes 20 et 21 sélectionnent la somme de contrôle « 0x600dcafe ».

La fin de la procédure de vote est analogue au cas précédent décrit en référence à la Fig. 11. Les deux enceintes 20 et 21 envoient chacune un message « Vote » (lors d'étapes S2030 et S2031) comportant l'identifiant du groupe GRPO, la somme de contrôle choisie (i.e. « 0x600dcafe »), l'époque associée (i.e. 12346) et un numéro de tour égal à 3, puis entament (étapes S2032 et S2033 respectivement) des temps d'attente Tp7 et Tp8 afin de laisser aux autres dispositifs du groupe le temps de voter.

À l'issue des temps d'attente Tp7 et Tp8, les deux enceintes 20 et 21 constatent que la somme de contrôle « 0x600dcafe » fait l'unanimité. L'enceinte 20 constate en outre que la somme de contrôle à l'issue des tours de vote est représentative de l'état du groupe tel qu'elle le connaissait avant le déclenchement de la procédure de vote. Elle entame donc (étape S2040) un temps d'attente Tp9 de durée aléatoire avant d'envoyer, lors d'une étape S2041, un message « GroupState » contenant l'état du groupe tel qu'elle le connaît. L'enceinte 21 constate que la somme de contrôle à l'issue des tours de vote n'est pas représentative de l'état du groupe tel qu'elle le connaissait avant le déclenchement de la procédure de vote. L'enceinte 21 attend alors de recevoir le message « GroupState ». A réception de ce message « GroupState », elle adopte le nouvel état du groupe et envoie, lors d'une étape S2042, un message « StateChange » pour notifier aux autres dispositifs du groupe qu'elle a changé d'état suite à l'adoption de l'état voté.

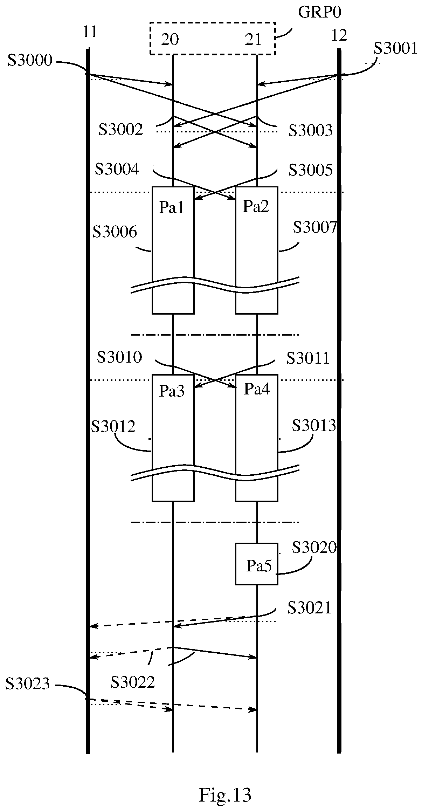

La Fig. 13 illustre, selon un mode particulier de réalisation, des échanges de messages lors de l'envoi de commandes concurrentes par deux contrôleurs 11 et 12 à deux enceintes 20 et 21 d'un même groupe GRPO. Le groupe en question peut comprendre d'autres dispositifs, e.g. d'autres enceintes et le cas échéant un ou des contrôleurs.

Au départ, le groupe GRPO est dans un état correspondant à une somme de contrôle égale à « Oxdeadbeef ». Dans cet exemple, le contrôleur 11 envoie une première commande (e.g. augmenter le volume à un niveau V1 supérieur au niveau du volume sonore courant) qui doit faire passer le groupe dans un état correspondant à une somme de contrôle égale à « 0xbaadf00d ». Parallèlement, le contrôleur 12 envoie une deuxième commande (e.g. diminuer le volume à un niveau V2 inférieur au niveau du volume sonore courant) qui doit faire passer le groupe dans un état correspondant à une somme de contrôle égale à « 0x600dcafe ».

A cet effet, le contrôleur 11 envoie, lors d'une étape S3000, un message « Command » comportant l'identifiant du groupe GRPO, l'ancienne somme de contrôle « Oxdeadbeef », la nouvelle somme de contrôle « 0xbaadf00d » correspondant à l'état du groupe après application de la première commande et les détails (e.g. le niveau du volume sonore V1) de ladite première commande.

Parallèlement, le contrôleur 12 envoie, lors d'une étape S3001, un message « Command » comportant l'identifiant du groupe GRPO, l'ancienne somme de contrôle « Oxdeadbeef », la nouvelle somme de contrôle « 0x600dcafe » correspondant à l'état du groupe après application de la deuxième commande et les détails (e.g. le niveau du volume sonore V2) de ladite deuxième commande.

Par exemple, l'enceinte 20 reçoit la commande envoyée à l'étape S3000 avant la commande envoyée à l'étape S3001. En réponse à la commande envoyée à l'étape S3000, l'enceinte 20 applique la commande et envoie, lors d'une étape S3002, un message « StateChange » comportant l'identifiant du groupe GRPO, l'ancienne somme de contrôle « Oxdeadbeef » et la nouvelle somme de contrôle « 0xbaadf00d » correspondant au nouvel état du groupe tel qu'elle le connaît après application de la commande reçue en premier.

Par exemple, l'enceinte 21 reçoit la commande envoyée à l'étape S3001 avant la commande envoyée à l'étape S3000. En réponse à la commande envoyée à l'étape S3001, l'enceinte 21 applique la commande et envoie, lors d'une étape S3003, un message « StateChange » comportant l'identifiant du groupe GRP0, l'ancienne somme de contrôle « Oxdeadbeef » et la nouvelle somme de contrôle « 0x600dcafe » correspondant au nouvel état du groupe tel qu'elle le connaît après application de la commande reçue en premier.

En réponse au message envoyé à l'étape S3001 et/ou au message envoyé à l'étape S3003, l'enceinte 20 constate une incohérence dans l'état du groupe. Elle prend donc l'initiative de déclencher une procédure de vote et envoie, lors d'une étape S3004, un message « Vote » comportant l'identifiant du groupe GRP0, la somme de contrôle « 0xbaadf00d » de l'état du groupe tel qu'elle le connaît et un numéro de tour égal à 0.

En réponse au message envoyé à l'étape S3000 et/ou au message envoyé à l'étape S3002, l'enceinte 21 constate elle aussi une incohérence dans l'état du groupe. Elle prend également l'initiative de déclencher une procédure de vote et envoie, lors d'une étape S3005, un message « Vote » comportant l'identifiant du groupe GRP0, la somme de contrôle « 0x600dcafe » de l'état du groupe tel qu'elle le connaît et un numéro de tour égal à 0.

Dans cet exemple, les enceintes 20 et 21 ont chacune de leur côté pris l'initiative de déclencher une procédure de vote. La procédure de vote décrite en référence à la Fig. 10 garantit que les deux demandes de votes sont combinées et qu'il n'y a, au final, qu'un seul vote commun.

La suite de la procédure de vote est similaire à celle décrite en référence à la Fig. 11. Ainsi, à l'issue de temps d'attente Pa1 et Pa2 entamées aux étapes S3006 et S3007 afin de laisser aux autres dispositifs du groupe le temps de voter, les enceintes 20 et 21 constatent que les deux sommes de contrôle (et donc les deux états possibles représentés par lesdites deux sommes de contrôle) sont ex-aequo (fin du premier tour de vote). Elles tirent chacune au hasard une somme de contrôle parmi lesdites deux sommes de contrôle. Par exemple ici, l'enceinte 20 change son choix pour « 0x600dcafe », tandis que l'enceinte 21 conserve le sien.

Pour le deuxième tour de vote, les enceintes 20 et 21 envoient chacune un message « Vote » lors d'étapes 3010 et 3011 comportant l'identifiant du groupe GRPO, un numéro de tour égal à 1 et la somme de contrôle pour laquelle elles ont voté, soit « 0x600dcafe » pour les deux, puis entament (étapes S3012 et S3013 respectivement) des temps d'attente Pa3 et Pa4 afin de laisser aux autres dispositifs du groupe le temps de voter.

A l'issue de temps d'attente Pa3 et Pa4 (fin du deuxième tour de vote), les enceintes 20 et 21 constatent que la somme de contrôle « 0x600dcafe » fait l'unanimité. L'enceinte 21, qui connaît le détail de l'état correspondant, attend (étape S3020) pendant un temps d'attente aléatoire Pa5 puis envoie, lors d'une étape S3021, un message « GroupState » contenant l'état du groupe tel qu'elle le connait.

L'enceinte 20, qui a perdu la procédure de vote, attend de recevoir le message envoyé à l'étape S3021 puis adopte le nouvel état du groupe et envoie, lors d'une étape S3022, un message « StateChange » pour notifier aux autres dispositifs du groupe qu'elle a changé d'état suite à l'adoption de l'état voté.

Dans le cas où les contrôleurs 11 et 12 sont abonnés au groupe multicast utilisé pour échanger les messages sur le réseau local LAN, ils reçoivent aussi les messages envoyés lors des étapes S3000 à 3022 (flèches non représentées sur la Fig. 13). Le contrôleur 11 peut donc constater que sa première commande n'a pas été prise en compte. Ce constat est fait en analysant le message envoyé lors de l'étape S3004 qui contient une somme de contrôle différente de la somme de contrôle contenue dans les messages envoyés lors des étapes S3010, S3011, S3021 et S3022. Ainsi, le contrôleur 11 peut décider de renvoyer, lors d'une étape S3023, un nouveau message « Command » comportant l'identifiant du groupe GRPO, la somme de contrôle « 0x600dcafe » obtenue à l'issue du vote, la nouvelle somme de contrôle « 0xbaadf00d » correspondant à l'état du groupe après application de ladite première commande et les détails de ladite première commande.

### Subdivision de l'état d'un groupe

Comme illustré Fig. 13, si deux contrôleurs envoient des commandes de manière concurrente, une seule de ces commandes est prise en compte, l'autre commande étant ignorée ou appliquée dans un second temps (e.g. étape S3023 de la Fig. 13). Or, il y a des cas où les deux commandes envoyées de manière concurrente par deux contrôleurs différents sont compatibles et pourraient donc être prises en compte. Par exemple, dans le cas d'un groupe d'enceintes connectées, si le contrôleur 11 envoie une commande de type « Lecture »
ou « Pause » tandis que le contrôleur 12 envoie une commande de changement du volume sonore, le groupe d'enceintes pourrait appliquer les deux commandes, ces dernières n'étant pas contradictoires.

### Mode de réalisation 1

Dans un premier mode de réalisation, l'état d'un groupe est subdivisé par fonctionnalités indépendantes. Des groupes indépendants sont alors créés, un groupe par fonctionnalité, appelé groupe fonctionnel. Chaque groupe fonctionnel a son propre identifiant et sa propre somme de contrôle. Ces groupes peuvent être constitués des mêmes dispositifs et être considérés comme un seul groupe logique pour l'utilisateur. Toutefois, ils sont considérés comme des groupes distincts pour les échanges réseau. Par exemple, dans le cas d'un groupe d'enceintes, l'état du groupe peut être subdivisé en plusieurs fonctionnalités listées ci-dessous :
1) une fonctionnalité « Gestion de lecture » qui permet de gérer les paramètres sur l'état de lecture (arrêté, en avance ou retour rapide, lecture en pause ou lecture en cours), l'URI du flux audio en cours de lecture, l'identification de l'horloge utilisée pour la synchronisation, et les paramètres nécessaires pour la synchronisation (e.g. heure de début ou position courante) ;
2) une fonctionnalité « Volume » qui permet de gérer le niveau du volume sonore ;
3) une fonctionnalité « Liste de lecture » qui permet de gérer l'ajout, la suppression ou le changement de l'ordre des flux à lire après le flux audio courant, la liste de lecture contenant les URI des flux audio à jouer une fois que la lecture du flux audio en cours est terminée ;
4) une fonctionnalité « Profil sonore » permettant de gérer des paramètres représentatifs du profil de rendu sonore, e.g. d'égalisation, de « loudness », de réverbération, de compression, etc. ;
5) une fonctionnalité « Répartition des rôles » permettant de gérer la répartition des rôles entre les enceintes : canal gauche/droite dans un flux stéréo par exemple.

Par exemple, dans le cas d'un groupe de dispositifs de reproduction vidéo, l'état du groupe peut être subdivisé en plusieurs fonctionnalités listées ci-dessous :
1) une fonctionnalité « Gestion de lecture » qui permet de gérer les paramètres de lecture vidéo ;
2) une fonctionnalité « Sélection » permettant de gérer la sélection du ou des appareils qui doivent diffuser le son en plus de l'image ;
3) une fonctionnalité « Liste de lecture » qui permet de gérer l'ajout, la suppression ou le changement de l'ordre des flux vidéo à lire après le flux vidéo courant, la liste de lecture contenant les URI des flux vidéo à jouer une fois que la lecture du flux vidéo en cours est terminée ;
4) une fonctionnalité « Répartition des rôles » permettant de gérer la répartition de flux vidéo entre les dispositifs de reproduction vidéo.

Comme chaque fonctionnalité fait l'objet d'un groupe indépendant avec, en particulier, sa propre somme de contrôle, des commandes qui concernent des fonctionnalités différentes ne provoquent pas de conflit.

Avantageusement, la gestion des groupes est simplifiée grâce à la combinaison d'un identifiant du groupe logique et d'un identifiant de la fonctionnalité pour définir les identifiants des groupes de fonctionnalité. Par exemple, l'identifiant d'un groupe logique peut être un UUID version 1 dans lequel les poids faibles de l'horodatage sont remplacés par 0. En particulier, les bits de poids faible correspondent aux 16 bits de poids faible du champ « TimeLow » décrit dans la Recommandation ITU-T Rec X.667. Les identifiants des groupes de fonctionnalité correspondants sont obtenus en remplaçant ces mêmes bits de poids faibles par un identifiant de la fonctionnalité. L'identifiant du groupe de fonctionnalité aura alors la structure « ggggffff-gggg-lggg-gggg-gggggggggggg » où « ffff » est un identifiant de la fonctionnalité et « gggg0000-gggg-1ggg-gggg-gggggggggggg » est un identifiant du groupe logique.

### Mode de réalisation 2

Dans un second mode de réalisation, l'état d'un groupe est subdivisé par fonctionnalité comme dans le premier mode de réalisation. Toutefois, au lieu de créer un groupe pour chaque fonctionnalité, un champ supplémentaire « features » est ajouté aux différents messages décrits précédemment. Ce champ « features » identifie les fonctionnalités concernées par le message. Ce champ « features » est un champ de bits, c'est-à-dire qu'il comporte au moins un bit par fonctionnalité. Par convention, si le bit a une valeur 1, alors le message concerne la fonctionnalité correspondante et si le bit a une valeur 0, alors le message ne concerne pas la fonctionnalité. Lorsqu'un message comporte une somme de contrôle, celle-ci est calculée en utilisant uniquement les données associées aux fonctionnalités dont le bit est à 1 dans le champ « features ».

A cet effet, les messages décrits dans les modes de réalisation précédents, à l'exception des messages « Join » et « Leave », sont modifiés comme décrit ci-dessous. Seuls les nouveaux champs sont expliqués. Les champs déjà présents dans les messages décrits dans les modes de réalisation précédents sont indiqués en italique.

Un exemple de message « RequestState » modifié est décrit dans le tableau ci-dessous :

| Nom | Description |
|---|---|
| *type* | *Type de message* |
| *group_id* | *Identifiant de groupe* |
| features | |
| feature_1 | La fonctionnalité 1 est-elle concernée par le message ? |
| feature_2 | La fonctionnalité 2 est-elle concernée par le message ? |
| ⋮ | |
| feature_*N* | La fonctionnalité N est-elle concernée par le message ? |

Ce message est envoyé par un dispositif pour demander aux membres d'un groupe l'état actuel dudit groupe concernant tout ou partie des fonctionnalités du groupe.

Pour gérer ces messages, chaque dispositif garde en mémoire une liste des fonctionnalités demandées par les autres dispositifs au moyen d'un message « RequestState » et pour lesquelles une réponse est donc attendue. Cette liste est initialement vide. Avantageusement, cette liste est implémentée sous la forme d'un champ de bits « wanted_features » ayant la même forme que le champ « features » du message. Par exemple, les bits du champ « wanted_features » sont initialement tous à zéro.

Lorsqu'un dispositif reçoit un message « RequestState », si le champ « group_id » du message correspond à l'identifiant de son propre groupe, alors si la liste mémorisée des fonctionnalités demandées est vide, le dispositif ajoute les fonctionnalités désignées par le champ « features » du message à la liste mémorisée et démarre un temps d'attente de durée relativement courte tirée au hasard (par exemple une durée inférieure à 100 ms). Par exemple, la liste est vide lorsque le dispositif reçoit un premier message « RequestState ».

Lorsqu'un dispositif reçoit un message « RequestState », si le champ « group_id » du message correspond à l'identifiant de son propre groupe, alors si la liste mémorisée des fonctionnalités demandées n'est pas vide, le dispositif ajoute les fonctionnalités désignées par le champ « features » du message à la liste mémorisée.

À expiration du temps d'attente, si la liste mémorisée n'est pas vide, alors le dispositif envoie un message « GroupState » contenant les paramètres d'état du groupe (champ « app_state ») liées aux fonctionnalités présentes dans la liste mémorisée et vide la liste mémorisée. L'utilisation d'un délai d'attente permet avantageusement d'envoyer un seul message « GroupState » pour plusieurs messages « RequestState » reçus, le cas échéant, pour des fonctionnalités différentes.

Un exemple de message « GroupState » modifié est décrit dans le tableau ci-dessous :

| Nom | Description |
|---|---|
| *type* | *Type de message* |
| *group_id* | *Identifiant de groupe* |
| features_hash | Somme de contrôle de l'état du groupe pour les fonctionnalités concernées par le message |
| features | |
| feature_1 | La fonctionnalité 1 est-elle concernée par le message ? |
| feature_2 | La fonctionnalité 2 est-elle concernée par le message ? |
| ⋮ | |
| feature_*N* | La fonctionnalité N est-elle concernée par le message ? |
| app_state | Etat du groupe pour les fonctionnalités concernées par le message |

Ce message est envoyé par un dispositif pour donner aux autres le détail de sa vision de l'état du groupe vis-à-vis d'une ou plusieurs fonctionnalités.

Lorsqu'un dispositif reçoit ce message, si le champ « group id » du message correspond à l'identifiant de son propre groupe, alors :
- Si le dispositif ne connaît pas l'état du groupe vis-à-vis d'une fonctionnalité, alors le dispositif adopte l'état du groupe vis-à-vis de cette fonctionnalité lequel est contenu dans le message. Ce cas se présente notamment quand le dispositif vient de démarrer, vient de rejoindre le groupe ou a perdu lors d'une procédure de vote.
- Sinon, optionnellement, le dispositif compare l'état du groupe vis-à-vis de chaque fonctionnalité contenue dans le message avec l'état qu'il connaît pour ladite fonctionnalité, et en cas de différence, il déclenche une procédure de vote. Dans un premier mode de réalisation, pour chaque fonctionnalité concernée par le message et donc pour chaque sous-état, le dispositif compare le sous-état décrit dans le message avec le sous-état correspondant qu'il connaît. En cas de différence, il déclenche une procédure de vote. Dans un second mode de réalisation, le dispositif compare le champ « features_hash » contenu dans le message avec une somme de contrôle représentative de l'état du groupe qu'il connaît vis-à-vis de ces fonctionnalités concernées par le message. Si les deux sommes de contrôle sont égales, alors les sous-états de ces fonctionnalités sont cohérents et il n'y a pas besoin de les comparer un par un. Si les deux sommes de contrôle sont différentes, alors le dispositif applique le premier mode de réalisation, i.e. qu'il compare les sous-états fonctionnalité par fonctionnalité pour trouver les sous-états incohérents.
- Si certaines fonctionnalités présentes dans le message sont aussi dans la liste mémorisée des fonctionnalités demandées, alors le dispositif retire ces fonctionnalités de la liste des fonctionnalités demandées, i.e. du champ « wanted_features ».

Le champ « features_hash » peut être omis et les dispositifs qui en ont besoin peuvent calculer la somme de contrôle eux-mêmes à partir de l'état décrit dans le message. En revanche, lorsque ce champ est présent, il contient une somme de contrôle des paramètres de l'état du groupe correspondant aux fonctionnalités désignées par le champ « features ». Il ne tient pas compte des paramètres de l'état du groupe correspondant aux autres fonctionnalités.

Un exemple de message « Command » modifié est décrit dans le tableau ci-dessous :

| Name | Description |
|---|---|
| *type* | *Type de message* |
| *group_id* | *Identifiant de groupe* |
| old_hash | Somme de contrôle de l'état du groupe avant exécution de la commande pour les fonctionnalités concernées par la commande |
| new_hash | Somme de contrôle de l'état du groupe après exécution de la commande pour les fonctionnalités concernées par la commande |
| features | |
| feature_1 | La fonctionnalité 1 est-elle concernée par la commande ? |
| feature_2 | La fonctionnalité 2 est-elle concernée par la commande ? |
| ⋮ | |
| feature_*N* | La fonctionnalité N est-elle concernée par la commande ? |
| *app_command* | *Données spécifiques de la commande* |

Ce message est envoyé par un contrôleur pour donner une instruction aux dispositifs du groupe vis-à-vis d'une ou plusieurs fonctionnalités ciblées. Les sommes de contrôle « old_hash » et « new_hash » sont calculées en utilisant uniquement les paramètres de l'état correspondant aux fonctionnalités concernées par la commande.

Lorsqu'un dispositif reçoit ce message, si le champ « group id » du message correspond à l'identifiant de son propre groupe, alors :
- Si le champ « new_hash » est égal à la somme de contrôle représentative de l'état du groupe connu par le dispositif pour les fonctionnalités concernées par la commande, alors la commande a déjà été exécutée et le message est ignoré.
- Si le champ « old_hash » est égal à la somme de contrôle représentative de l'état du groupe connu par le dispositif pour les fonctionnalités concernées par la commande, alors la commande est valable. Le dispositif exécute donc la commande décrite dans le champ « app_command », puis vérifie que la somme de contrôle du nouvel état pour les fonctionnalités concernées est bien égale à la valeur de « new_hash ». Si elle est différente, alors la commande n'était pas valide et le dispositif restaure l'état précédent du groupe, ou déclenche une procédure de vote. Ensuite, le dispositif envoie un message « StateChange » qui permet de notifier, aux autres dispositifs du groupe (y compris au contrôleur qui a émis la commande), un changement d'état suite à la prise en compte de la commande.
- Si ni le champ « new_hash, » ni le champ « old_hash » ne sont égaux à la somme de contrôle représentative de l'état du groupe connu par le dispositif pour les fonctionnalités concernées, alors il y a une incohérence et le dispositif déclenche une procédure de vote.

Dans un mode de réalisation particulier, le champ « features » est omis du message. Dans ce cas, le dispositif utilise les détails de la commande pour déterminer la liste des fonctionnalités concernées. Par exemple, une commande « Volume+ » concerne uniquement la fonctionnalité « Volume » tandis qu'une commande « Piste suivante » concerne les fonctionnalités « Gestion de lecture » et « Liste de lecture ». Ainsi, le dispositif peut déterminer les paramètres à utiliser pour calculer les sommes de contrôle à partir du champ « app_command. »

Ce second mode de réalisation permet de gérer correctement des changements d'état qui concernent plusieurs groupes de fonctionnalité simultanément tout en limitant la charge réseau, les messages échangés pouvant concerner une pluralité de fonctionnalités.

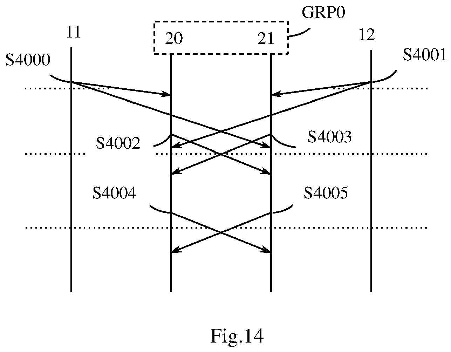

La Fig. 14 illustre, selon un mode particulier de réalisation, des échanges de messages lors de l'envoi de commandes concurrentes, concernant des fonctionnalités distinctes, par deux contrôleurs 11 et 12 à deux enceintes 20 et 21 d'un même groupe GRPO. Le groupe en question peut comprendre d'autres dispositifs, e.g. d'autres enceintes et le cas échéant un ou des contrôleurs.

Dans cet exemple, l'état du groupe est divisé en trois fonctionnalités, le contrôleur 11 envoie une commande concernant les fonctionnalités A (désignée par le premier bit de poids faible dans le champ « features ») et B (désignée par le deuxième bit de poids faible dans le champ « features »), et le contrôleur 12 envoie une commande concernant la fonctionnalité C (désignée par le troisième bit de poids faible dans le champ « features »).

Le contrôleur 11 envoie, lors d'une étape S4000, un premier message « Command » comportant la liste des fonctionnalités concernées par la première commande. Ici, cette liste est représentée en positionnant le champ « features » à la valeur binaire « 011 ». Le premier message « Command » contient aussi une somme de contrôle représentative de l'ancien état du groupe pour les fonctionnalités A et B dans le champ « old_hash » et une somme de contrôle du nouvel état du groupe pour ces fonctionnalités dans le champ « new_hash ».

De manière concurrente, le contrôleur 12 envoie, lors d'une étape S4001, un second message « Command » comportant la liste des fonctionnalités concernées par la deuxième commande. Ici, cette liste est représentée en positionnant le champ « features » à la valeur binaire « 100 ». Le second message contient aussi une somme de contrôle représentative de l'ancien état du groupe pour la fonctionnalité C dans le champ « old_hash » et une somme de contrôle du nouvel état du groupe pour la fonctionnalité 2 dans le champ « new_hash ».

Dans cet exemple, l'enceinte 20 reçoit, en premier, le premier message « Command », applique la commande correspondante et envoie, lors d'une étape S4002, un message « StateChange » notifiant un changement d'état suite à la prise en compte de la première commande.

Lorsque l'enceinte 20 reçoit le second message « Command », l'état global du groupe connu de l'enceinte 20 a été modifié par rapport à l'état global du groupe connu de l'enceinte 20 à l'émission du second message « Command ». L'état global comprend un ensemble de sous-états, chaque sous-état étant l'état du groupe vis-à-vis d'une fonctionnalité associée. Dans le mode de réalisation décrit en référence à la Fig. 13, une procédure de vote est déclenchée dans cette situation (étapes S3004 et étape S3005 sur la Fig.13). Cependant, dans le présent mode de réalisation, l'enceinte 20 constate que le champ « features » du second message « Command » désigne la seule fonctionnalité C. Comme la fonctionnalité C n'a pas été affectée par la première commande, l'enceinte 20 constate que la somme de contrôle contenue dans le champ « old_hash » est bien conforme à l'état actuel du groupe pour la fonctionnalité C. Par conséquent, l'enceinte 20 accepte la deuxième commande, l'applique et envoie, lors d'une étape S4004, un message « StateChange » notifiant un changement d'état suite à la prise en compte de la deuxième commande.

De même dans cet exemple, l'enceinte 21 reçoit, en premier, le second message « Command », applique la deuxième commande et envoie, lors d'une étape S4003, un message « StateChange » notifiant un changement d'état suite à la prise en compte de la seconde commande.

Lorsque l'enceinte 21 reçoit le premier message « Command », elle constate que le champ « features » désigne les fonctionnalités A et B et que le champ « old_hash » correspond bien à l'état actuel du groupe pour ces fonctionnalités. Par conséquent, l'enceinte 21 applique la première commande et envoie, lors d'une étape S4005, un message « StateChange » notifiant un changement d'état suite à la prise en compte de la première commande.

Ainsi, bien que les commandes soient reçues dans un ordre différent par chaque enceinte, les enceintes 20 et 21 aboutissent à un état cohérent qui tient compte des deux commandes. Peu de messages ont été échangés et aucune procédure de vote n'a été déclenchée.

Un exemple de message « StateChange » modifié est décrit dans le tableau ci-dessous :

| Nom | | Description |
|---|---|---|
| *type* | | *Type de message* |
| *has_old_hash* | | *Le message contient-il un champ « old_hash »* |
| *has_command* | | *Le message contient-il un champ « app_command »* |
| *group_id* | | *Identifiant de groupe* |
| | old_hash | Somme de contrôle de l'état du groupe avant le changement d'état pour les fonctionnalités concernées par le changement d'état (champ présent/absent selon la valeur du champ « has_old_hash » |
| new_hash | | Somme de contrôle de l'état du groupe après le changement d'état pour les fonctionnalités concernées par le changement d'état |
| features | | |
| feature_1 | | La fonctionnalité 1 est-elle concernée par le changement d'état ? |
| feature_2 | | La fonctionnalité 2 est-elle concernée par le changement d'état ? |
| ⋮ | | |
| feature_N | | La fonctionnalité N est-elle concernée par le changement d'état ? |
| app_command | | Données spécifiques de la commande. (champ présent/absent selon la valeur du champ « has_command ») |

Ce message est envoyé par les dispositifs pour notifier aux autres lorsque leur vision de l'état du groupe relatif à au moins une fonctionnalité a changé. Ce changement peut survenir en réponse à une commande, et dans ce cas, il est avantageux d'inclure ladite commande dans le message. En effet, si un autre dispositif du groupe n'a pas reçu le message « Command », alors il peut quand même appliquer la commande en question lorsqu'il reçoit le message « StateChange ».

Le champ « old_hash » est omis lorsque le dispositif qui envoie le message ne connaissait pas l'état précédent du groupe, par exemple parce qu'il vient de démarrer ou parce qu'il a perdu une procédure de vote qui a invalidé l'état du groupe qu'il croyait connaître.

Lorsqu'un dispositif reçoit ce message, si le champ « group id » du message correspond à l'identifiant de son propre groupe, alors :
- Si le message comporte une commande, alors il est traité comme un message « Command ».
- Sinon, si le champ « new_hash » est égal à la somme de contrôle représentative de l'état du groupe connu par le dispositif pour les fonctionnalités désignées par le champ « features », alors le groupe est dans un état cohérent et le message est ignoré.
- Si le message ne comporte pas de commande et que le champ « old_hash » est égal à la somme de contrôle représentative de l'état du groupe connu par le dispositif pour les fonctionnalités désignées, alors le dispositif envoie un message « RequestState » afin d'obtenir les informations sur le nouvel état du groupe. Avantageusement, ce message « RequestState » contient un champ « features » identique à celui du message « StateChange » reçu afin que l'état transmis en réponse ne contienne que les données utiles.
- Enfin, si le message ne comporte pas de commande et que ni le champ « old_hash » ni le champ « new_hash » du message ne correspondent à la somme de contrôle représentative de l'état du groupe connu par le dispositif pour les fonctionnalités désignées par le champ « features », alors le dispositif déclenche une procédure de vote.

Selon un mode particulier de réalisation, le champ « features » est omis du message lorsque le champ « app_command » est présent. Dans ce cas le dispositif utilise les détails de la commande pour déterminer la liste des fonctionnalités concernées comme pour le message « Command ».

La procédure de vote est aussi préférentiellement modifiée pour prendre en compte la différentiation par fonctionnalités. Un exemple de message « Vote » modifié est décrit dans le tableau ci-dessous :

| Nom | Description |
|---|---|
| *type* | *Type de message* |
| *group_id* | *Identifiant de groupe* |
| features_hash | Somme de contrôle représentative de l'état du groupe pour les fonctionnalités concernées par le vote |
| features | |
| feature_1 | La fonctionnalité 1 est-elle concernée par le vote ? |
| feature_2 | La fonctionnalité 2 est-elle concernée par le vote ? |
| ⋮ | |
| feature_*N* | La fonctionnalité N est-elle concernée par le vote ? |
| round | Numéro de tour de vote |

Lorsqu'un dispositif du groupe détecte une incohérence concernant l'état du groupe vis-à-vis d'une ou plusieurs fonctionnalités, il déclenche une procédure de vote. La procédure de vote se déroule selon le même principe que la procédure de vote décrite en référence à la Fig. 10 avec des modifications décrites ci-après.

Chaque vote s'applique à une ou plusieurs fonctionnalités spécifiées par le champ « features » des messages « Vote ». Ainsi, plusieurs scrutins peuvent se produire simultanément du moment qu'ils concernent des groupes de fonctionnalités disjoints. Par exemple, il peut y avoir simultanément un scrutin concernant la fonctionnalité « Volume » et un autre scrutin concernant les fonctionnalités « Gestion de lecture » et « Liste de lecture ». Dans ce cas, les scrutins se déroulent avec des échanges de messages « Vote » indépendants, et chaque dispositif gère indépendamment les tours de vote, les choix et les compteurs de chaque scrutin.

Inversement, un scrutin peut concerner plusieurs fonctionnalités à la fois. Dans ce cas, le champ « features » des messages « Vote » relatifs audit scrutin désigne toutes les fonctionnalités concernées, et chaque dispositif ne gère qu'un seul choix et un seul jeu de compteurs pour l'ensemble des fonctionnalités concernées par le scrutin.

Dans la suite, on fait la distinction entre un sous-ensemble « large » et sous-ensemble « strict ». A est un sous-ensemble large de B si toutes les fonctionnalités de A sont incluses dans B, y compris dans le cas où A=B. A est un sous-ensemble strict de B si toutes les fonctionnalités de A sont incluses dans B et si B contient au moins une fonctionnalité qui n'est pas incluse dans A. Donc tous les sous-ensembles stricts de B sont aussi des sous-ensembles larges de B, tandis que B est un sous-ensemble large de lui-même mais pas un sous-ensemble strict.

Lorsqu'un dispositif reçoit un message « Vote », quatre cas se présentent :
- Si le champ « features » du message correspond exactement à la liste des fonctionnalités d'un scrutin en cours, alors le dispositif suit la machine d'état décrite en référence à la Fig. 10 pour ledit scrutin ;
- Si le champ « features » du message est disjoint des listes de fonctionnalités de tous les scrutins en cours, c'est-à-dire si aucune fonctionnalité désignée par le champ « features » n'est impliquée dans un scrutin en cours, alors le dispositif démarre un nouveau scrutin concernant les fonctionnalités désignées dans le champ « features » et passe dans l'état E601 de la Fig. 10 pour ce scrutin ;
- Si le champ « features » du message reçu est un sous-ensemble strict de la liste des fonctionnalités d'un scrutin en cours, c'est-à-dire si toutes les fonctionnalités désignées par le champ « features » sont impliquées dans un même scrutin et que ledit scrutin concerne aussi au moins une autre fonctionnalité, alors le dispositif ignore le message ;
- Sinon, le champ « features » du message reçu contient au moins une fonctionnalité impliquée dans au moins un scrutin en cours et au moins une autre fonctionnalité qui n'est pas impliquée dans ledit scrutin. Ladite autre fonctionnalité peut être impliquée dans un autre scrutin, ou bien n'être impliqué dans aucun scrutin en cours.

Dans ce dernier cas :
▪ Le dispositif constitue une liste de scrutins obsolètes, contenant tous les scrutins en cours qui concernent au moins une fonctionnalité désignée par le champ « features » du message ;
▪ Le dispositif constitue une liste des toutes les fonctionnalités impliquées dans au moins un des scrutins obsolètes et de toutes les fonctionnalités désignées par le champ « features » du message ;
▪ Le dispositif met fin aux scrutins obsolètes en sortant directement de la machine d'état. En particulier, le dispositif ne passe pas par les états E609 à E611 et n'envoie pas de message « GroupState » ni « RequestState » pour les scrutins obsolètes ;
▪ Le dispositif initialise un nouveau scrutin concernant les fonctionnalités de la liste constituée et passe dans l'état E601 pour ce nouveau scrutin.

Lorsqu'un dispositif veut déclencher une procédure de vote concernant au moins une fonctionnalité, trois cas se présentent :
- Si la liste des fonctionnalités concernées par le nouveau scrutin est disjointe des listes de fonctionnalités de tous les scrutins en cours, alors le dispositif démarre le nouveau scrutin normalement ;
- Si la liste des fonctionnalités concernées par le nouveau scrutin est un sous-ensemble large de la liste des fonctionnalités d'un scrutin en cours, alors le dispositif ne fait rien. En effet, ledit scrutin en cours assurera la cohérence des fonctionnalités concernées par le nouveau scrutin ;
- Sinon, la liste des fonctionnalités concernées par le nouveau scrutin contient au moins une fonctionnalité impliquée dans un scrutin en cours et au moins une fonctionnalité qui n'est pas impliquée dans ledit scrutin en cours. Dans ce cas, le dispositif procède comme ci-dessus en établissant une liste des scrutins obsolètes et une liste des fonctionnalités impliquées dans les scrutins obsolètes ou concernées par le nouveau scrutin, puis en interrompant les scrutins obsolètes et en démarrant un nouveau scrutin.

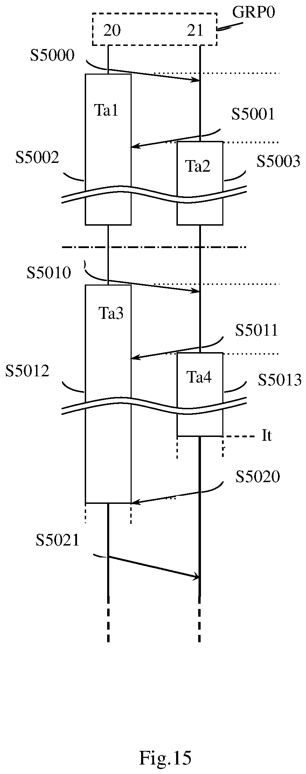

La Fig. 15 illustre, selon un mode particulier de réalisation, des échanges de messages entre deux enceintes 20 et 21 d'un même groupe GPR0 lors d'une procédure de vote dans le cas où l'état du groupe est subdivisé par fonctionnalité. Le groupe en question peut comprendre d'autres enceintes et le cas échéant un ou des contrôleurs. Dans cet exemple, le vote concerne deux fonctionnalités A et B parmi trois fonctionnalités A, B, C. En outre, au cours de la procédure de vote, l'enceinte 21 détecte un changement impliquant les fonctionnalités B et C provoquant une interruption du vote en cours et le lancement d'un nouveau vote concernant les trois fonctionnalités A, B et C.

Dans cet exemple, l'enceinte 20 initie la procédure de vote en envoyant, lors d'une étape S5000, un message « Vote » dans lequel le champ « features » a la valeur binaire « 011 » désignant les fonctionnalités A et B. Puis, l'enceinte 20 entame (étape S5002) un temps d'attente Ta1 pour le premier tour du vote afin de laisser aux autres dispositifs du groupe le temps de voter.

Lorsque l'enceinte 21 reçoit le message envoyé à l'étape S5000, elle démarre à son tour une procédure de vote en envoyant, lors d'une étape S5001, un message « Vote » et en démarrant (étape S5003) un temps d'attente Ta2 afin de laisser aux autres dispositifs du groupe le temps de voter.

À l'expiration des temps d'attente Ta1 et Ta2, les enceintes 20 et 21 passent au deuxième tour du vote en envoyant chacune (étape S5010 et S5011) un nouveau message « Vote » et en démarrant chacune (étapes S5012 et S5013) un nouveau temps d'attente Ta3 et Ta4 afin de laisser aux autres dispositifs du groupe le temps de voter.

Dans cet exemple, à un instant It au cours de l'intervalle d'attente Ta4, l'enceinte 21 observe un changement de l'état du groupe concernant les fonctionnalités B et C. Comme la fonctionnalité B est impliquée dans la procédure de vote en cours, et que la fonctionnalité C n'est pas impliquée dans la procédure de vote en cours, l'enceinte 21 interrompt le temps d'attente Ta4 et la procédure de vote en cours. Si le changement d'état du groupe concernait uniquement des fonctionnalités impliquées dans la procédure de vote en cours, par exemple uniquement la fonctionnalité B, alors l'enceinte 21 aurait simplement déclenché un nouveau tour de vote comme décrit en référence à la Fig.12A. De même, si le changement d'état impliquait uniquement des fonctionnalités non concernées par la procédure de vote en cours, par exemple uniquement la fonctionnalité C, alors l'enceinte 21 aurait simplement envoyé un message « StateChange » pour notifier le changement d'état en question, sans que cela affecte la procédure de vote en cours.

Ensuite, l'enceinte 21 démarre une nouvelle procédure de vote concernant les fonctionnalités A, B et C (les fonctionnalités A et B parce qu'elles étaient impliquées dans la procédure de vote en cours, et la fonctionnalité C parce qu'elle est affectée par le changement d'état en plus de la fonctionnalité B). À cet effet, l'enceinte 21 envoie, lors d'une étape S5020, un message « Vote » dans lequel le champ « features » a la valeur binaire « 111 » désignant les trois fonctionnalités A, B et C concernées par la procédure de vote.

Lorsque l'enceinte 20 reçoit le message « Vote » envoyé à l'étape S5020, elle constate que le champ « features » du message désigne des fonctionnalités pour lesquelles il y avait déjà un vote en cours, i.e. les fonctionnalités A et B, et une fonctionnalité qui ne faisait jusqu'ici pas l'objet d'une procédure de vote, i.e. la fonctionnalité C. Par conséquent, l'enceinte 20 interrompt le temps d'attente Ta3 et la procédure de vote en cours, puis participe à la nouvelle procédure de vote en envoyant, lors d'une étape S5021, un message « Vote » dans lequel le champ « features » a la valeur binaire « 111 » désignant les trois fonctionnalités A, B et C.

La suite du vote procède de manière similaire à ce qui est décrit en références aux Figs 11, 12A, 12B et 13. Les deux enceintes 20 et 21 échangeant des messages pour chaque tour de vote jusqu'à se mettre d'accord sur un état commun pour les trois fonctionnalités A, B et C.

Selon un mode particulier de réalisation, l'état global stocké par chaque dispositif comporte une seule époque, qui est incrémentée à chaque fois que l'un quelconque des sous-états est modifié. Cette époque globale est utilisée pour tous les votes, quelles que soient les fonctionnalités impliquées dans chaque vote. Ce mode de réalisation est simple à mettre en œuvre. Toutefois, dans ce mode de réalisation, un vote concernant une fonctionnalité donnée peut être perturbé par un changement de l'époque suite à des modifications d'un état du groupe qui concerne une autre fonctionnalité. Ainsi, selon une variante de réalisation, chaque sous-état comporte une époque, qui est incrémentée lorsque ledit sous-état est modifié. Selon ce mode de réalisation, lors d'un vote, les messages « Vote » comportent un seul champ « epoch » qui contient la valeur maximale des époques associées aux fonctionnalités concernées par le vote. Ainsi, il y a moins de risque de choisir un sous-état obsolète lors d'un tour de vote.

### Contrôleur

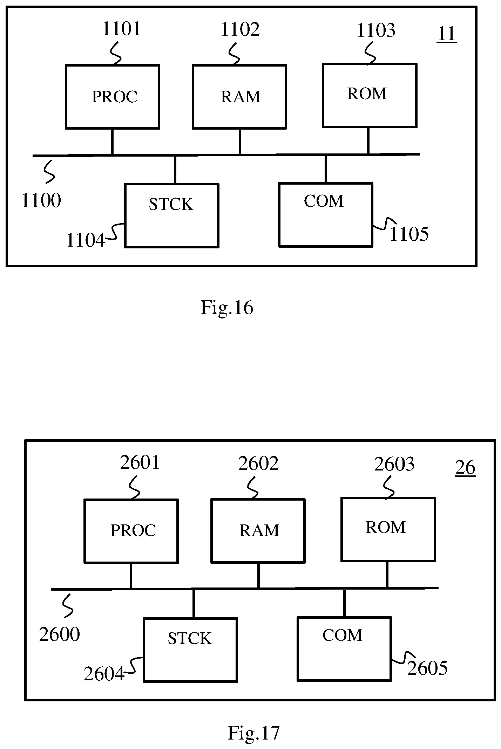

La Fig. 16 illustre schématiquement un exemple d'architecture matérielle d'un contrôleur, tel que le contrôleur 11, selon un mode particulier de réalisation. Selon l'exemple d'architecture matérielle représenté à la Fig. 16, le contrôleur 11 comprend alors, reliés par un bus de communication 1100 : un processeur ou CPU (« Central Processing Unit » en anglais) 1101 ; une mémoire vive RAM (« Random Access Memory » en anglais) 1102 ; une mémoire morte ROM (« Read Only Memory » en anglais) 1103 ; une unité de stockage 1104, telle qu'un disque dur ou telle qu'un lecteur de support de stockage, e.g. un lecteur de cartes SD (« Secure Digital » en anglais); au moins une interface de communication 1105 permettant au contrôleur 11 d'envoyer ou de recevoir des messages dans le réseau local LAN.

Le processeur 1101 est capable d'exécuter des instructions chargées dans la RAM 1102 à partir de la ROM 1103, d'une mémoire externe (non représentée), d'un support de stockage (tel qu'une carte SD), ou d'un réseau de communication. Lorsque le contrôleur 11 est mis sous tension, le processeur 1101 est capable de lire de la RAM 1102 des instructions et de les exécuter. Ces instructions forment un programme d'ordinateur causant la mise en œuvre, par le processeur 1101, de tout ou partie des procédés décrits en relation avec les Figs. 2A à 15.

Les procédés décrits en relation avec les Figs. 2A à 15 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). En général, le contrôleur 11 comprend de la circuiterie électronique configurée pour mettre en œuvre les procédés décrits en relation avec les Figs. 2A à 15.

### Dispositif de reproduction

La Fig. 17 illustre schématiquement un exemple d'architecture matérielle d'un dispositif de reproduction 26 ; tel que l'enceinte connectée 20, selon un mode particulier de réalisation. Selon l'exemple d'architecture matérielle représenté à la Fig. 17, le dispositif de reproduction 26 comprend alors, reliés par un bus de communication 2600 : un processeur ou CPU (« Central Processing Unit » en anglais) 2601 ; une mémoire vive RAM (« Random Access Memory » en anglais) 2602 ; une mémoire morte ROM (« Read Only Memory » en anglais) 2603 ; une unité de stockage 2604 telle qu'un disque dur ou telle qu'un lecteur de support de stockage, e.g. un lecteur de cartes SD (« Secure Digital » en anglais); au moins une interface de communication 2605 permettant au dispositif de reproduction 26 d'envoyer ou de recevoir des informations.

Le processeur 2601 est capable d'exécuter des instructions chargées dans la RAM 2602 à partir de la ROM 2603, d'une mémoire externe (non représentée), d'un support de stockage (tel qu'une carte SD), ou d'un réseau de communication. Lorsque le dispositif de reproduction 26 est mis sous tension, le processeur 2601 est capable de lire de la RAM 2602 des instructions et de les exécuter. Ces instructions forment un programme d'ordinateur causant la mise en œuvre, par le processeur 2601, de tout ou partie des procédés décrits en relation avec les Figs. 2A à 15.

Les procédés décrits en relation avec les Figs. 2A à 15 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). En général, le dispositif de reproduction 26 comprend de la circuiterie électronique configurée pour mettre en œuvre les procédés décrits en relation avec les Figs. 2A à 15.

Les messages décrits dans les différents modes de réalisation peuvent être des messages sous format binaire. D'autres formats peuvent être utilisés, comme par exemple le format JSON (acronyme anglais de « JavaScript Object Notation ») ou XML (acronyme anglais de « Extensible Markup Language »).

Les messages décrits dans les différents modes de réalisation sont principalement destinés à être envoyés en multicast sur un réseau local LAN. Dans un système où les dispositifs offrent une compatibilité avec le protocole UPnP A/V, il peut être avantageux d'assurer un mécanisme de compatibilité avec le protocole UPnP. A cet effet, chaque groupe de dispositifs, e.g. chaque groupe d'enceintes connectées, est considéré comme un nouveau périphérique UPnP A/V. Ainsi, l'utilisateur peut utiliser des logiciels compatibles UPnP pour envoyer des commandes aux groupes. Le périphérique sera exposé en UPnP soit par le contrôleur, soit par l'un des dispositifs du groupe (par exemple la première enceinte membre du groupe). L'élément (contrôleur ou enceinte) exposant le groupe via UPnP fait office de passerelle. Dès lors, lorsque l'élément faisant office de passerelle reçoit une commande via UPnP, il la relaie sous la forme de messages tels que définis en lien avec les différents modes de réalisation décrits ci-dessus.

Un dispositif compatible UPnP possédant déjà les moyens (e.g. briques logicielles) pour traiter des messages SSDP, il est avantageux de les utiliser pour transférer les messages définis en lien avec les différents modes de réalisation décrits ci-dessus. Le protocole SSDP est essentiellement destiné à la découverte et à la connaissance des dispositifs et services disponibles sur le réseau local LAN. Toutefois, des messages SSDP de type GENA (acronyme anglais de « General Event Notification Architecture ») peuvent être utilisés pour transmettre les messages tels que définis en lien avec les différents modes de réalisation décrits ci-dessus.

Conformément aux recommandations UPnP, les messages SSDP sont envoyés via le port UPD 1900 en utilisant l'adresse multicast 239.255.255.250 pour l'IPv4, ou l'adresse [FF02::C] pour l'IPv6. Un tel message comprend une pluralité de champs, tels que :
- un champ NT qui permet d'identifier le type de service utilisé ;
- un champ NTS qui indique le type de notification ;
- un champ USN (acronyme anglais de « Unique Service Name ») qui permet d'identifier de manière unique le service utilisé.

Pour tous ces champs, un identifiant « avsync » est créé pour définir le type de service, i.e. envoi d'un message de commande tel que défini en lien avec les différents modes de réalisation décrits ci-dessus.

Le champ NTS peut utiliser le format « SSDP:avsync » pour faire passer ce message de commande pour un message SSDP, ce qui peut simplifier la compatibilité avec certaines implémentations. Toutefois, ce format n'est pas totalement conforme à UPnP car « avsync » ne fait pas partie des identifiants définis par SSDP. Une variante avantageuse consiste à utiliser le format « avsync:commande ».

Les paramètres associés au message de commande, e.g. message « Join », tels que définis en lien avec les différents modes de réalisation décrits ci-dessus sont transférés dans le corps du message, sérialisés sous forme XML.

## Revendications

1. Un procédé de synchronisation d'un dispositif avec un groupe de dispositifs fonctionnant de manière synchronisée, chaque dispositif dudit groupe ayant en mémoire un état dudit groupe tel que connu dudit dispositif, ledit groupe étant contrôlé par au moins un contrôleur configuré pour envoyer des commandes auxdits dispositifs, lesdits dispositifs et ledit au moins un contrôleur étant interconnectés par un réseau local, ledit procédé comprenant :
- recevoir (S303), par un dispositif dudit groupe, un message de requête d'un état courant dudit groupe envoyé en multicast par un dispositif dudit groupe à synchroniser ;
- tirer (S304) aléatoirement une durée et attendre pendant ladite durée ;
- dans le cas d'une réception d'un message d'état de groupe émis par un autre dispositif dudit groupe, interrompre (S304), son attente ;
- sinon, envoyer (S305) en multicast un message d'état de groupe comprenant un état dudit groupe connu dudit dispositif.

2. Le procédé de synchronisation selon la revendication 1 dans lequel :
- à réception du message d'état de groupe (S306), adopter, par ledit dispositif à synchroniser, l'état dudit groupe compris dans ledit message d'état de groupe ;
- envoyer (S308) en multicast, par ledit dispositif à synchroniser, un message de changement d'état pour informer lesdits autres dispositifs dudit groupe de son adoption de l'état dudit groupe compris dans ledit message d'état de groupe.

3. Le procédé selon la revendication 2, dans lequel à réception du message de changement d'état ou du message d'état de groupe par un dispositif dudit groupe, ledit dispositif dudit groupe compare une somme de contrôle représentative de l'état de groupe qu'il connaît avec une somme de contrôle représentative de l'état de groupe compris dans ledit message reçu et déclenche une procédure de vote en cas de différence pour sélectionner un état de groupe commun, les dispositifs dudit groupe perdant la procédure de vote adoptant l'état de groupe commun.

4. Le procédé selon la revendication 2 ou 3, dans lequel ledit message de changement d'état comprenant une somme de contrôle représentative de l'état de groupe adopté par ledit dispositif à synchroniser, chaque autre dispositif dudit groupe, à réception dudit message de changement d'état, compare une somme de contrôle représentative de l'état de groupe qu'il connaît avec ladite somme de contrôle comprise dans ledit message de changement d'état reçu et déclenche une procédure de vote en cas de différence pour sélectionner un état de groupe commun, les dispositifs dudit groupe perdant la procédure de vote adoptant l'état de groupe commun.

5. Le procédé selon l'une des revendications 1 à 4, comprenant, préalablement à l'envoi en multicast, par ledit dispositif à synchroniser, dudit message de requête d'un état courant dudit groupe :
envoyer (S301), par ledit contrôleur, un message de rattachement demandant audit dispositif à synchroniser de rejoindre ledit groupe, ledit message de rattachement comprenant un identifiant dudit dispositif à synchroniser ; et
par chaque dispositif dudit groupe recevant ledit message de rattachement, comparer (S302) ledit identifiant dudit dispositif à synchroniser compris dans ledit message de rattachement avec son propre identifiant et rejoindre ledit groupe en cas d'égalité.

6. Le procédé selon la revendication 5, dans lequel, dans le cas où ledit identifiant dudit dispositif à synchroniser compris dans ledit message de rattachement est différent de son propre identifiant, le dispositif recevant ledit message de rattachement mémorise le fait que ledit dispositif identifié par ledit identifiant compris dans ledit message de rattachement rejoint le groupe.

7. Le procédé selon l'une des revendications 1 à 6, comprenant :
- envoyer (S400), par ledit contrôleur, un message de détachement demandant à un dispositif dudit groupe, dit dispositif sortant, de sortir dudit groupe, ledit message de détachement comprenant un identifiant dudit dispositif sortant ; et
- par chaque dispositif dudit groupe recevant ledit message de détachement, comparer (S402) ledit identifiant dudit dispositif à synchroniser compris dans ledit message de détachement avec son propre identifiant et sortir dudit groupe en cas d'égalité.

8. Le procédé selon la revendication 7, dans lequel, dans le cas où ledit identifiant dudit dispositif compris dans ledit message de détachement est différent de son propre identifiant, le dispositif recevant ledit message de détachement mémorise le fait que ledit dispositif identifié par ledit identifiant compris dans ledit message de détachement sort du groupe.

9. Le procédé selon l'une des revendications 1 à 8, comprenant les étapes suivantes pour éteindre un dispositif dudit groupe fonctionnant de manière synchronisée, ledit procédé étant exécuté par le dispositif à éteindre :
- Extinction des services et composants nécessaires à une activité opérationnelle du dispositif à éteindre à l'exception des services et composants nécessaires aux communications réseau ;
- Détection, par ledit dispositif à éteindre, de la présence sur le réseau local d'au moins un autre dispositif appartenant audit groupe ;
- Extinction des services et composants du dispositif à éteindre nécessaires aux communications réseau dans le cas où au moins un autre dispositif appartenant audit groupe est détecté par ledit dispositif à éteindre comme présent sur le réseau local ;
- dans le cas où aucun autre dispositif appartenant audit groupe n'est détecté par le dispositif à éteindre comme présent sur le réseau local alors le dispositif à éteindre exécute les étapes suivantes :
- Attente d'une réception d'un message en provenance d'un autre dispositif dudit groupe ;
- si ledit message reçu est un message de requête d'un état dudit groupe, envoi, par ledit dispositif à éteindre, d'un message comprenant ledit état dudit groupe connu dudit dispositif à éteindre et extinction des services et composants du dispositif à éteindre nécessaires aux communications réseau ;
- si ledit message reçu est un message indiquant que ledit autre dispositif dudit groupe connait ledit état du groupe, extinction des services et composants du dispositif à éteindre nécessaires aux communications réseau.

10. Le procédé selon l'une des revendications 1 à 9, dans lequel ledit contrôleur est un dispositif dudit groupe.

11. Un dispositif d'un groupe de dispositifs fonctionnant de manière synchronisée, chaque dispositif dudit groupe ayant en mémoire un état dudit groupe tel que connu dudit dispositif, ledit groupe étant contrôlé par au moins un contrôleur configuré pour envoyer des commandes auxdits dispositifs, lesdits dispositifs et ledit au moins un contrôleur étant interconnectés par un réseau local, ledit dispositif comprenant de la circuiterie électronique configurée pour :
- Recevoir (S303) un message de requête d'un état courant dudit groupe envoyé en multicast par ledit dispositif à synchroniser ;
- Tirer (S303) aléatoirement une durée et attendre pendant ladite durée ;
- Dans le cas d'une réception d'un message d'état de groupe émis par un autre dispositif dudit groupe, interrompre (S304), son attente ;
- Sinon, envoyer (S304) en multicast un message d'état de groupe comprenant un état dudit groupe connu dudit dispositif.

12. Un système comprenant un groupe de dispositifs fonctionnant de manière synchronisée, chaque dispositif dudit groupe ayant en mémoire un état dudit groupe tel que connu dudit dispositif, ledit groupe étant contrôlé par au moins un contrôleur configuré pour envoyer des commandes auxdits dispositifs, lesdits dispositifs et ledit au moins un contrôleur étant interconnectés par un réseau local, ledit système étant configuré pour mettre en œuvre le procédé de synchronisation selon l'une des revendications 1 à 10.

13. Un produit programme d'ordinateur **caractérisé en ce qu'**il comprend des instructions pour mettre en œuvre, par au moins un processeur, le procédé selon l'une quelconque des revendications 1 à 10, lorsque ledit programme est exécuté par ledit au moins un processeur.

14. Un support de stockage **caractérisé en ce qu'**il stocke un programme d'ordinateur comprenant des instructions pour mettre en œuvre par au moins un processeur, le procédé selon l'une quelconque des revendications 1 à 10, lorsque ledit programme est exécuté par ledit au moins un processeur.

## Patentansprüche

1. Verfahren zur Synchronisierung einer Vorrichtung mit einer Gruppe von synchronisiert funktionierenden Vorrichtungen, wobei jede Vorrichtung der Gruppe im Speicher einen Status der Gruppe, wie er der Vorrichtung bekannt ist, hat, wobei die Gruppe von mindestens einem Controller gesteuert wird, der dazu ausgestaltet ist, Befehle an die Vorrichtungen zu senden, wobei die Vorrichtungen und der mindestens eine Controller über ein lokales Netzwerk vernetzt sind, wobei das Verfahren umfasst:
- Empfangen (S303), durch eine Vorrichtung der Gruppe, einer Nachricht zur Abfrage eines aktuellen Status der Gruppe, die im Multicast von einer zu synchronisierenden Vorrichtung der Gruppe gesendet wird;
- zufälliges Bestimmen (S304) einer Dauer und Warten während dieser Dauer;
- im Fall eines Empfangens einer Gruppenstatusnachricht, die von einer anderen Vorrichtung der Gruppe gesendet wird, Unterbrechen (S304) ihres Wartens;
- ansonsten Senden (S305) im Multicast einer Gruppenstatusnachricht, die einen der Vorrichtung bekannten Status der Gruppe umfasst.

2. Synchronisierungsverfahren nach Anspruch 1 bei dem:
- beim Empfangen der Gruppenstatusnachricht (S306), Annehmen, durch die zu synchronisierende Vorrichtung, des in der Gruppenstatusnachricht enthaltenen Status der Gruppe;
- Senden (S308) im Multicast, durch die zu synchronisierende Vorrichtung, einer Statusänderungsnachricht, um die anderen Vorrichtungen der Gruppe über ihre Annahme des in der Gruppenstatusnachricht enthaltenen Status der Gruppe zu informieren.

3. Verfahren nach Anspruch 2, bei dem, beim Empfangen der Statusänderungsnachricht oder der Gruppenstatusnachricht durch eine Vorrichtung der Gruppe, die Vorrichtung der Gruppe eine für den Gruppenstatus, den sie kennt, repräsentative Prüfsumme mit einer für den in der empfangenen Nachricht enthaltenen Gruppenstatus repräsentativen Prüfsumme vergleicht und im Fall einer Differenz ein Abstimmungsverfahren auslöst, um einen gemeinsamen Gruppenstatus zu wählen, wobei die Vorrichtungen der Gruppe, die das Abstimmungsverfahren verlieren, den gemeinsamen Gruppenstatus annehmen.

4. Verfahren nach Anspruch 2 oder 3, bei dem, wenn die Statusänderungsnachricht eine Prüfsumme umfasst, die für den von der zu synchronisierenden Vorrichtung angenommenen Gruppenstatus repräsentativ ist, jede andere Vorrichtung der Gruppe beim Empfangen der Statusänderungsnachricht eine für den Gruppenstatus, den sie kennt, repräsentative Prüfsumme mit der in der empfangenen Statusänderungsnachricht enthaltenen Prüfsumme vergleicht und im Fall einer Differenz ein Abstimmungsverfahren auslöst, um einen gemeinsamen Gruppenstatus zu wählen, wobei die Vorrichtungen der Gruppe, die das Abstimmungsverfahren verlieren, den gemeinsamen Gruppenstatus annehmen.

5. Verfahren nach einem der Ansprüche 1 bis 4, umfassend, vor dem Senden im Multicast der Nachricht zur Abfrage eines aktuellen Status der Gruppe durch die zu synchronisierende Vorrichtung:
Senden (S301), durch den Controller, einer Kopplungsnachricht, die die zu synchronisierende Vorrichtung auffordert, der Gruppe beizutreten, wobei die Kopplungsnachricht eine Kennung der zu synchronisierenden Vorrichtung umfasst; und durch jede Vorrichtung der Gruppe, die die Kopplungsnachricht empfängt, Vergleichen (S302) der in der Kopplungsnachricht enthaltenen Kennung der zu synchronisierenden Vorrichtung mit ihrer eigenen Kennung und Beitreten der Gruppe im Fall der Gleichheit.

6. Verfahren nach Anspruch 5, bei dem in dem Fall, indem die in der Kopplungsnachricht enthaltene Kennung der zu synchronisierenden Vorrichtung verschieden von ihrer eigenen Kennung ist, die Vorrichtung, die die Kopplungsnachricht empfängt, die Tatsache speichert, dass die durch die in der Kopplungsnachricht enthaltene Kennung identifizierte Vorrichtung der Gruppe beitritt.

7. Verfahren nach einem der Ansprüche 1 bis 6, umfassend:
- Senden (S400), durch den Controller, einer Abkopplungsnachricht, die eine Vorrichtung der Gruppe, verlassende Vorrichtung genannt, auffordert, die Gruppe zu verlassen, wobei die Abkopplungsnachricht eine Kennung der verlassenden Vorrichtung umfasst; und
- durch jede Vorrichtung der Gruppe, die die Abkopplungsnachricht empfängt, Vergleichen (S402) der in der Abkopplungsnachricht enthaltenen Kennung der zu synchronisierenden Vorrichtung mit ihrer eigenen Kennung und Verlassen der Gruppe im Fall der Gleichheit.

8. Verfahren nach Anspruch 7, bei dem in dem Fall, in dem die in der Abkopplungsnachricht enthaltene Kennung der Vorrichtung verschieden von ihrer eigenen Kennung ist, die Vorrichtung, die die Abkopplungsnachricht empfängt, die Tatsache speichert, dass die durch die in der Abkopplungsnachricht enthaltene Kennung identifizierte Vorrichtung die Gruppe verlässt.

9. Verfahren nach einem der Ansprüche 1 bis 8, umfassend die folgenden Schritte, um eine Vorrichtung der synchronisiert funktionierenden Gruppe auszuschalten, wobei das Verfahren von der auszuschaltenden Vorrichtung ausgeführt wird:
- Ausschalten der Dienste und Komponenten, die für eine Betriebstätigkeit der auszuschaltenden Vorrichtung erforderlich sind, mit Ausnahme der Dienste und Komponenten, die für die Netzwerkkommunikation erforderlich sind;
- Detektieren, durch die auszuschaltende Vorrichtung, der Anwesenheit mindestens einer anderen zu der Gruppe gehörenden Vorrichtung in dem lokalen Netzwerk;
- Ausschalten der Dienste und Komponenten der auszuschaltenden Vorrichtung, die für die Netzwerkkommunikation erforderlich sind, in dem Fall, in dem mindestens eine andere zu der Gruppe gehörende Vorrichtung von der auszuschaltenden Vorrichtung als im lokalen Netzwerk vorhanden detektiert wird;
- in dem Fall, in dem keine andere zu der Gruppe gehörende Vorrichtung von der auszuschaltenden Vorrichtung als im lokalen Netzwerk vorhanden detektiert wird, führt die auszuschaltende Vorrichtung dann die folgenden Schritte aus:
- Warten auf ein Empfangen einer von einer anderen Vorrichtung der Gruppe kommenden Nachricht;
- wenn die empfangene Nachricht eine Nachricht zur Abfrage eines Status der Gruppe ist, Senden, durch die auszuschaltende Vorrichtung, einer Nachricht, die den der auszuschaltenden Vorrichtung bekannten Status der Gruppe umfasst, und Ausschalten der Dienste und Komponenten der auszuschaltenden Vorrichtung, die für die Netzwerkkommunikation erforderlich sind;
- wenn die empfangene Nachricht eine Nachricht ist, die angibt, dass die andere Vorrichtung der Gruppe den Status der Gruppe kennt, Ausschalten der Dienste und Komponenten der auszuschaltenden Vorrichtung, die für die Netzwerkkommunikation erforderlich sind.

10. Verfahren nach einem der Ansprüche 1 bis 9, bei dem der Controller eine Vorrichtung der Gruppe ist.

11. Vorrichtung einer Gruppe von synchronisiert funktionierenden Vorrichtungen, wobei jede Vorrichtung der Gruppe im Speicher einen Status der Gruppe, wie er der Vorrichtung bekannt ist, hat, wobei die Gruppe von mindestens einem Controller gesteuert wird, der dazu ausgestaltet ist, Befehle an die Vorrichtungen zu senden, wobei die Vorrichtungen und der mindestens eine Controller über ein lokales Netzwerk vernetzt sind, wobei die Vorrichtung, die elektronische Schaltkreise umfasst, ausgestaltet ist zum:
- Empfangen (S303) einer Nachricht zur Abfrage eines aktuellen Status der Gruppe, die im Multicast von der zu synchronisierenden Vorrichtung gesendet wird;
- zufälligen Bestimmen (S303) einer Dauer und Warten während dieser Dauer;
- im Fall eines Empfangens einer Gruppenstatusnachricht, die von einer anderen Vorrichtung der Gruppe gesendet wird, Unterbrechen (S304) ihres Wartens;
- ansonsten Senden (S304) im Multicast einer Gruppenstatusnachricht, die einen der Vorrichtung bekannten Status der Gruppe umfasst.

12. System, umfassend eine Gruppe von synchronisiert funktionierenden Vorrichtungen, wobei jede Vorrichtung der Gruppe im Speicher einen Status der Gruppe, wie er der Vorrichtung bekannt ist, hat, wobei die Gruppe von mindestens einem Controller gesteuert wird, der dazu ausgestaltet ist, Befehle an die Vorrichtungen zu senden, wobei die Vorrichtungen und der mindestens eine Controller über ein lokales Netzwerk vernetzt sind, wobei das System dazu ausgestaltet ist, das Synchronisierungsverfahren nach einem der Ansprüche 1 bis 10 umzusetzen.

13. Computerprogrammprodukt, **dadurch gekennzeichnet, dass** es Anweisungen umfasst, um, durch mindestens einen Prozessor, das Verfahren nach einem der Ansprüche 1 bis 10 umzusetzen, wenn das Programm von dem mindestens einen Prozessor ausgeführt wird.

14. Speichermedium, **dadurch gekennzeichnet, dass** es ein Computerprogramm speichert, das Anweisungen umfasst, um durch mindestens einen Prozessor das Verfahren nach einem der Ansprüche 1 bis 10 umzusetzen, wenn das Programm von dem mindestens einen Prozessor ausgeführt wird.

## Claims

1. Method for synchronizing a device with a group of devices functioning in a synchronized manner, each device in said group having in memory a state of said group as known by said device, said group being controlled by at least one controller configured to send commands to said devices, said devices and said at least one controller being interconnected by way of a local area network, said method comprising:
- receiving (S303), by way of a device in said group, a request message for requesting a present state of said group sent as a multicast by a device in said group to be synchronized;
- randomly selecting (S304) a duration and waiting for said duration;
- if a group state message transmitted by another device in said group is received, interrupting (S304) its waiting;
- otherwise, sending (S305) a group state message comprising a state of said group known by said device as a multicast.

2. Synchronization method according to Claim 1, wherein:
- when the group state message is received (S306), adopting, by way of said device to be synchronized, the state of said group included in said group state message;
- sending (S308), by way of said device to be synchronized, a state change message as a multicast in order to inform said other devices in said group of its adoption of the state of said group included in said group state message.

3. Method according to Claim 2, wherein when the state change message or the group state message is received by a device in said group, said device in said group compares a checksum representative of the group state that it knows with a checksum representative of the group state included in said received message and triggers a voting procedure in the event of a difference in order to select a common group state, the devices in said group losing the voting procedure adopting the common group state.

4. Method according to Claim 2 or 3, wherein if said state change message comprises a checksum representative of the group state adopted by said device to be synchronized, each other device in said group, on receiving said state change message, compares a checksum representative of the group state that it knows with said checksum included in said received state change message and triggers a voting procedure in the event of a difference in order to select a common group state, the devices in said group losing the voting procedure adopting the common group state.

5. Method according to one of Claims 1 to 4, comprising, prior to said request message for requesting a present state of said group being sent by said device to be synchronized as a multicast:
sending (S301), by way of said controller, an attach message asking said device to be synchronized to rejoin said group, said attach message comprising an identifier of said device to be synchronized; and
comparing (S302), by way of each device in said group receiving said attach message, said identifier of said device to be synchronized included in said attach message with its own identifier and rejoining said group in the event of identity.

6. Method according to Claim 5, wherein, if said identifier of said device to be synchronized included in said attach message is different from its own identifier, the device receiving said attach message stores the fact that said device identified by said identifier included in said attach message rejoins the group.

7. Method according to one of Claims 1 to 6, comprising:
- sending (S400), by way of said controller, a detach message asking a device in said group, called the leaving device, to leave said group, said detach message comprising an identifier of said leaving device; and
- comparing (S402), by way of each device in said group receiving said detach message, said identifier of said device to be synchronized included in said detach message with its own identifier and leaving said group in the event of identity.

8. Method according to Claim 7, wherein, if said identifier of said device included in said detach message is different from its own identifier, the device receiving said detach message stores the fact that said device identified by said identifier included in said detach message leaves the group.

9. Method according to one of Claims 1 to 8, comprising the following steps for switching off a device in said group functioning in a synchronized manner, said method being performed by the device to be switched off:
- stopping the services and components required for an operational activity of the device to be switched off except for the services and components required for network communications;
- detecting, by way of said device to be switched off, the presence on the local area network of at least one other device belonging to said group;
- stopping the services and components of the device to be switched off that are required for network communications if at least one other device belonging to said group is detected as being present on the local area network by said device to be switched off;
- if no other device belonging to said group is detected as being present on the local area network by the device to be switched off, then the device to be switched off performs the following steps:
- waiting to receive a message from another device in said group;
- if said received message is a request message for requesting a state of said group, sending, by way of said device to be switched off, a message comprising said state of said group known by said device to be switched off and stopping the services and components of the device to be switched off that are required for network communications;
- if said received message is a message indicating that said other device in said group knows said state of the group, stopping the services and components of the device to be switched off that are required for network communications.

10. Method according to one of Claims 1 to 9, wherein said controller is a device in said group.

11. Device in a group of devices functioning in a synchronized manner, each device in said group having in memory a state of said group as known by said device, said group being controlled by at least one controller configured to send commands to said devices, said devices and said at least one controller being interconnected by way of a local area network, said device comprising electronic circuitry configured to:
- receive (S303) a request message for requesting a present state of said group sent as a multicast by said device to be synchronized;
- randomly select (S303) a duration and wait for said duration;
- if a group state message transmitted by another device in said group is received, interrupt (S304) its waiting;
- otherwise, send (S304) a group state message comprising a state of said group known by said device as a multicast.

12. System comprising a group of devices functioning in a synchronized manner, each device in said group having in memory a state of said group as known by said device, said group being controlled by at least one controller configured to send commands to said devices, said devices and said at least one controller being interconnected by way of a local area network, said system being configured to implement the synchronization method according to one of Claims 1 to 10.

13. Computer program product, **characterized in that** it comprises instructions for implementing, by way of at least one processor, the method according to any one of Claims 1 to 10 when said program is executed by said at least one processor.

14. Storage medium, **characterized in that** it stores a computer program comprising instructions for implementing, by way of at least one processor, the method according to any one of Claims 1 to 10 when said program is executed by said at least one processor.
